# EUROPEAN PATENT APPLICATION

(11) **EP 4 601 374 A1**
(43) Date of publication of application: **13.08.2025**
(21) Application number: 23876815.4
(22) Date of filing: 13.10.2023
(51) Int. Cl.: H04W 72/04

(54) **DOWNLINK TRANSMISSION METHOD, AND TERMINAL AND NETWORK-SIDE DEVICE**

(30) Priority: 14.10.2022 CN 202211261770
(71) Applicant: Vivo Mobile Communication Co., Ltd., Dongguan, Guangdong 523863 (CN)
(72) Inventor: WANG, Lihui, Dongguan, Guangdong 523863 (CN); PAN, Xueming, Dongguan, Guangdong 523863 (CN)
(74) Representative: Murgitroyd & Company
(86) International application number: PCT/CN2023/124505
(87) International publication number: WO 2024/078616

(57) **Abstract**

This application discloses a downlink transmission method, a terminal, and a network-side device, and relates to the field of wireless communication. The downlink transmission method in embodiments of this application includes: in a case that a first downlink transmission and a second downlink transmission at least partially overlap in time domain but do not overlap in frequency domain, determining, by a terminal, a processing manner of the first downlink transmission and the second downlink transmission according to whether a total quantity of frequency domain resources occupied by the first downlink transmission and the second downlink transmission is greater than a bandwidth capability of the terminal, where the bandwidth capability of the terminal is N, and N is less than 20 MHz.

## Description

### CROSS-REFERENCE TO RELATED APPLICATION

This application claims priority to Chinese Patent Application No. 202211261770.2, filed in China on October 14, 2022, which is incorporated herein by reference in its entirety.

### TECHNICAL FIELD

This application relates to the field of wireless communication, and specifically, to a downlink transmission method, a terminal, and a network-side device.

### BACKGROUND

With the development of communication technologies, a new type of terminal apparatus, that is, a reduced capability (reduced capability, RedCap) terminal, is introduced into a new radio (New Radio, NR) system, and has a narrower bandwidth capability or a fewer quantity of receive antennas than an ordinary terminal. For example, R18 discloses that a maximum bandwidth capability of the RedCap terminal in a frequency range 1 (Frequency range 1, FR1) is only 5 MHz, which causes the RedCap terminal to have a lower terminal capability. In this case, how to ensure that the RedCap terminal can effectively process a plurality of received downlink transmissions (especially, in a case that downlink transmissions overlap in time domain but do not overlap in frequency domain), to ensure communication quality is still a technical problem urgently to be resolved in the art.

### SUMMARY

Embodiments of this application provide a downlink transmission method, a terminal, and a network-side device, which can ensure that a RedCap terminal can effectively process a plurality of received downlink transmissions to ensure communication quality.

According to a first aspect, a downlink transmission method is provided. The method includes: determining, by a terminal in a case that a first downlink transmission and a second downlink transmission at least partially overlap in time domain but do not overlap in frequency domain, a processing manner of the first downlink transmission and the second downlink transmission whether a total quantity of frequency domain resources occupied by the first downlink transmission and the second downlink transmission is greater than a bandwidth capability of the terminal, where the bandwidth capability of the terminal is N, and N is less than 20 MHz.

According to a second aspect, a downlink transmission method is provided. The method includes: sending, by a network-side device, a first downlink transmission and a second downlink transmission to a terminal, where the first downlink transmission and the second downlink transmission at least partially overlap in time domain but do not overlap in frequency domain, and a bandwidth capability of the terminal is N, and N is less than 20 MHz.

According to a third aspect, a downlink transmission apparatus is provided. The apparatus includes: a processing module, configured to: determine, in a case that a first downlink transmission and a second downlink transmission at least partially overlap in time domain but do not overlap in frequency domain, a processing manner of the first downlink transmission and the second downlink transmission whether a total quantity of frequency domain resources occupied by the first downlink transmission and the second downlink transmission is greater than a bandwidth capability of a terminal, where the bandwidth capability of the terminal is N, and N is less than 20 MHz.

According to a fourth aspect, a downlink transmission apparatus is provided. The apparatus includes: a transmission module, configured to send a first downlink transmission and a second downlink transmission to a terminal, where the first downlink transmission and the second downlink transmission at least partially overlap in time domain but do not overlap in frequency domain, and a bandwidth capability of the terminal is N, and N is less than 20 MHz.

According to a fifth aspect, a terminal is provided. The terminal includes a processor and a memory, where the memory stores a program or instructions executable on the processor, the program or instructions, when executed by the processor, implementing the steps of the method according to the first aspect.

According to a sixth aspect, a terminal is provided. The terminal includes a processor and a communication interface, where the communication interface is coupled to the processor, and the processor is configured to run a program or instructions, to implement the steps of the method according to the first aspect.

According to a seventh aspect, a network-side device is provided. The network-side device includes a processor and a memory, where the memory stores a program or instructions executable on the processor, the program or instructions, when executed by the processor, implementing the steps of the method according to the second aspect.

According to an eighth aspect, a network-side device is provided. The network-side device includes a processor and a communication interface, where the communication interface is coupled to the processor, and the processor is configured to run a program or instructions, to implement the steps of the method according to the second aspect.

According to a ninth aspect, a wireless communication system is provided. The system includes: a terminal and a network-side device, where the terminal may be configured to perform the steps of the downlink transmission method according to the first aspect, and the network-side device may be configured to perform the steps of the downlink transmission method according to the second aspect.

According to a tenth aspect, a readable storage medium is provided. The readable storage medium stores a program or instructions, where the program or the instructions, when executed by a processor, implement the steps of the method according to the first aspect, or implement the steps of the method according to the second aspect.

According to an eleventh aspect, a chip is provided. The chip includes a processor and a communication interface, where the communication interface is coupled to the processor, and the processor is configured to run a program or instructions, to implement the steps of the method according to the first aspect, or implement the steps of the method according to the second aspect.

According to a twelfth aspect, a computer program product/program product is provided, where the computer program product/program product is stored in a storage medium and executed by at least one processor to implement the steps of the method according to the first aspect, or to implement the steps of the method according to the second aspect.

In embodiments of this application, in a case that a first downlink transmission and a second downlink transmission at least partially overlap in time domain but do not overlap in frequency domain, a behavior of a terminal is defined by determining a relationship between a total quantity of frequency domain resources occupied by the first downlink transmission and the second downlink transmission and a bandwidth capability of the terminal, so that the terminal can effectively process a plurality of received downlink transmissions, thereby ensuring communication quality.

### BRIEF DESCRIPTION OF THE DRAWINGS

FIG. 1 is a schematic structural diagram of a wireless communication system according to an exemplary embodiment of this application;
FIG. 2 is a schematic flowchart of a downlink transmission method according to an exemplary embodiment of this application;
FIG. 3 is a schematic flowchart of a downlink transmission method according to another exemplary embodiment of this application;
FIG. 4 is a schematic flowchart of a downlink transmission method according to another exemplary embodiment of this application;
FIG. 5 is a schematic structural diagram of a downlink transmission apparatus according to an exemplary embodiment of this application;
FIG. 6 is a schematic structural diagram of a downlink transmission apparatus according to another exemplary embodiment of this application;
FIG. 7 is a schematic structural diagram of a communication device according to an exemplary embodiment of this application;
FIG. 8 is a schematic structural diagram of a terminal according to an exemplary embodiment of this application; and
FIG. 9 is a schematic structural diagram of a network-side device according to an exemplary embodiment of this application.

### DETAILED DESCRIPTION

The following clearly describes the technical solutions in embodiments of this application with reference to the accompanying drawings in embodiments of this application. Apparently, the described embodiments are some embodiments of this application rather than all embodiments. All other embodiments obtained by a person of ordinary skill in the art based on embodiments of this application fall within the protection scope of this application.

The specification and claims of this application, and terms "first" and "second" are used to distinguish similar objects, but are unnecessarily used to describe a specific sequence or order. It should be understood that the terms used in such a way are interchangeable in proper circumstances, so that embodiments of this application can be implemented in other orders than the sequence illustrated or described herein. Objects distinguished by "first", "second", and the like are usually one type, and a quantity of objects is not limited. For example, a first object may be one or more than one. In addition, in the specification and the claims, "and/or" represents at least one of connected objects, and the character "/" generally represents an "or" relationship between associated objects.

It should be noted that, the technologies described in embodiments of this application are not limited to a long term evolution (Long Term Evolution, LTE)/an LTE-Advanced (LTE-Advanced, LTE-A) system, and may further be applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in embodiments of this application are often used interchangeably, and the described technology can be applied to the systems and radio technologies mentioned above, and can also be applied to other systems and radio technologies. The following description describes a new radio (New Radio, NR) system for example objectives, and NR terms are used in most of the description below, although these technologies are also applied to applications other than NR system applications, such as a 6^{th} generation (6^{th} Generation, 6G) communication system.

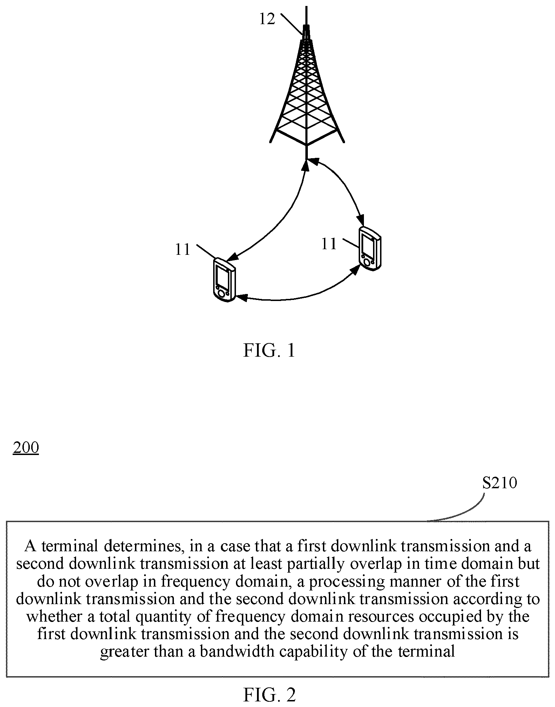

FIG. 1 is a block diagram of a wireless communication system to which an embodiment of this application can be applied. The wireless communication system includes a terminal 11 and a network-side device 12. The terminal 11 may be a terminal-side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/a virtual reality (virtual reality, VR) device, a robot, a wearable device (Wearable Device), a vehicle user equipment (Vehicle User Equipment, VUE), a pedestrian user equipment (Pedestrian User Equipment, PUE), smart household (home devices having a wireless communication function, for example, a refrigerator, a television, a washing machine, or furniture), a game console, a personal computer (personal computer, PC), a teller machine, or a self-service machine. The wearable device includes: a smart watch, a smart wristband, smart headphones, smart glasses, smart jewelry (such as a smart bangle, a smart bracelet, a smart ring, a smart necklace, a smart anklet bangle, and a smart anklet), a smart wrist strap, smart clothes, and the like. It should be noted that, a specific type of the terminal 11 is not limited in embodiments of this application. The network-side device 12 may include an access network device or a core network device, where the access network device may also be referred to as a radio access network device, a radio access network (Radio Access Network, RAN), a radio access network function, or a radio access network unit. The access network device may include a base station, a WLAN access point, or a Wi-Fi node, where the base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission reception point (Transmission Reception Point, TRP) or some other suitable terms in the field. Provided that the same technical effects are achieved, the base station is not limited to a specific technical word. It should be noted that, only a base station in the NR system is used as an example for description, and a specific type of the base station is not limited in embodiments of this application.

The technical solution provided in embodiments of this application is described in detail below through some embodiments and application scenarios thereof with reference to the accompanying drawings.

FIG. 2 is a schematic flowchart of a downlink transmission method 200 according to an exemplary embodiment of this application. The method 200 may be, but is not limited to, performed by a terminal, and may be specifically performed by hardware and/or software installed in the terminal. In this embodiment, the method 200 may include at least the following steps.

S210: A terminal determines, in a case that a first downlink transmission and a second downlink transmission at least partially overlap in time domain but do not overlap in frequency domain (for example, are located in different physical resource blocks (Physical Resource Blocks, PRBs)), a processing manner of the first downlink transmission and the second downlink transmission according to whether a total quantity of frequency domain resources occupied (or used) by the first downlink transmission and the second downlink transmission is greater than (or exceeds) a bandwidth capability of the terminal.

The bandwidth capability (or referred to as a baseband bandwidth) of the terminal may be understood as a capability of the terminal to receive, process, or cache a signal. Based on this, in a possible implementation, the bandwidth capability of the terminal may include, but is not limited to, at least one of the following (a) to (c):
(a) a receiving bandwidth N1 of the terminal, where N1 is not greater than 20 MHz, such as 5 MHz or 10 MHz;
(b) a cache bandwidth N2 of the terminal, where N2 is not greater than 20 MHz, such as 5 MHz or 10 MHz; or
(c) a processing bandwidth N3 of the terminal, where N3 is not greater than 5 MHz, such as 1 MHz or 5 MHz.

It should be noted that the terminal mentioned in this embodiment may be a Redcap terminal with a reduced capability, may be a terminal with a bandwidth capability of only 5 MHz, or may be a terminal with a bandwidth capability of less than 20 MHz.

Based on this, it is assumed that when the network-side device sends the first downlink transmission and the second downlink transmission, the first downlink transmission and the second downlink transmission at least partially overlap in time domain but do not overlap in frequency domain. In this case, for the terminal in this embodiment, the terminal cannot process, according to a downlink transmission processing manner in the related art, a received downlink transmission that partially overlaps in time domain but does not overlap in frequency domain due to a reduced or limited capability of the terminal. To address this problem, in this embodiment, a behavior of the terminal, for example, the terminal demodulates or does not demodulate the first downlink transmission or the second downlink transmission, is defined by determining a relationship between the total quantity of frequency domain resources occupied by the first downlink transmission and the second downlink transmission and the bandwidth capability of the terminal, so that the terminal can effectively process a plurality of received downlink transmissions, thereby ensuring communication quality.

Certainly, when determining, according to whether the total quantity of frequency domain resources occupied (or used) by the first downlink transmission and the second downlink transmission is greater than the bandwidth capability of the terminal, the processing manner of the first downlink transmission and the second downlink transmission, the terminal may determine, according to whether the total quantity of frequency domain resources occupied by the first downlink transmission and the second downlink transmission in a first time unit is greater than the bandwidth capability (for example, the receiving bandwidth, the cache bandwidth, and the processing bandwidth) of the terminal in a second time unit, to demodulate or not to demodulate the first downlink transmission and the second downlink transmission. The first time unit and the second time unit may respectively include one or more orthogonal frequency division multiplexing (Orthogonal Frequency Division Multiplexing, OFDM) symbols, one or more slots, one or more sub-slots, and the like, and the first time unit may be the same as or different from the second time unit.

It should be noted that for different subcarrier spacings (Subcarrier Spacings, SCSs), the first time unit and the second time unit include different quantities of symbols, slots, or sub-slots.

In addition, the first downlink transmission and the second downlink transmission mentioned in this embodiment may be a physical downlink shared channel (Physical downlink shared channel, PDSCH), a physical broadcast channel (Physical broadcast channel, PBCH), or the like. This is not limited herein.

In this embodiment, in a case that the first downlink transmission and the second downlink transmission at least partially overlap in time domain but do not overlap in frequency domain, the behavior of the terminal is defined by determining the relationship between the total quantity of frequency domain resources occupied by the first downlink transmission and the second downlink transmission and the bandwidth capability of the terminal, so that the terminal can effectively process the plurality of received downlink transmissions, thereby ensuring communication quality.

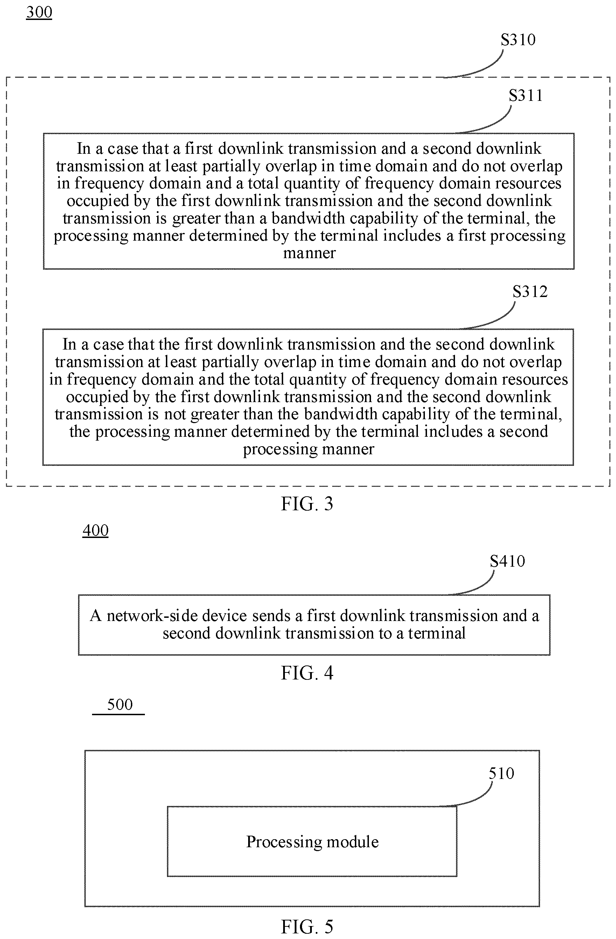

FIG. 3 is a schematic flowchart of a downlink transmission method 300 according to an exemplary embodiment of this application. The method 300 may be, but is not limited to, performed by a terminal, and may be specifically performed by hardware and/or software installed in the terminal. In this embodiment, the method 300 may include at least the following steps.

S310: A terminal determines, in a case that a first downlink transmission and a second downlink transmission at least partially overlap in time domain but do not overlap in frequency domain, a processing manner of the first downlink transmission and the second downlink transmission according to whether a total quantity of frequency domain resources occupied by the first downlink transmission and the second downlink transmission is greater than a bandwidth capability of the terminal.

The bandwidth capability of the terminal is N, and N is less than 20 MHz.

It may be understood that for an implementation process of S310, refer to related descriptions in the method embodiment 200. In a possible implementation, when the terminal determines the processing manner of the first downlink transmission and the second downlink transmission according to whether the total quantity of frequency domain resources occupied by the first downlink transmission and the second downlink transmission is greater than the bandwidth capability of the terminal, the implementation process of S310 may include, but is not limited to, S311 and S312 shown in FIG. 3.

S311: In a case that the first downlink transmission and the second downlink transmission at least partially overlap in time domain and do not overlap in frequency domain and the total quantity of frequency domain resources occupied by the first downlink transmission and the second downlink transmission is greater than the bandwidth capability of the terminal, the processing manner determined by the terminal includes a first processing manner. The first processing manner may include, but is not limited to, at least one of the following manner 1 to manner 5.

Manner 1: Expect (expect, or may be referred to as look forward) or prioritize demodulation of a third downlink transmission.

The third downlink transmission is a downlink transmission that is in the first downlink transmission and the second downlink transmission and is scheduled (or scrambled) by a first radio network temporary identifier (Radio Network Temporary Identifier, RNTI).

Optionally, in a case that the terminal is in an idle state (Idle, for example, a radio resource control (Radio Resource Control, RRC)-Idle) or an inactive state (INACTIVE, for example, RC-INACTIVE), the first RNTI may include a random access (Random Access, RA)-RNTI, a message B (Message B, Msg B)-RNTI, a temporary cell (Temporary Cell, TC)-RNTI, or the like. In a case that the terminal is in a connected state (or referred to as an activated state), the first RNTI may include a system information (System Information, SI)-RNTI, and the like.

In other words, in a case that the first downlink transmission and the second downlink transmission at least partially overlap in time domain and do not overlap in frequency domain, and the total quantity of frequency domain resources occupied by the first downlink transmission and the second downlink transmission is greater than the bandwidth capability of the terminal, and in a case that the terminal is in the idle state or the inactive state, the terminal looks forward (or expects) to be capable of decoding a downlink transmission scheduled or scrambled by the RA-RNTI (or the Msg B-RNTI or the TC-RNTI), or the terminal preferentially decodes a downlink transmission scheduled or scrambled by the RA-RNTI (or the Msg B-RNTI or the TC-RNTI). In a case that the terminal is in the connected state, the terminal looks forward (or expects) to be capable of decoding a downlink transmission scheduled or scrambled by the SI-RNTI, or the terminal preferentially decodes a downlink transmission scheduled or scrambled by the SI-RNTI.

Alternatively, the third downlink transmission is a downlink transmission with a higher priority in the first downlink transmission and the second downlink transmission. In other words, in a case that the first downlink transmission and the second downlink transmission at least partially overlap in time domain and do not overlap in frequency domain, and the total quantity of frequency domain resources occupied by the first downlink transmission and the second downlink transmission is greater than the bandwidth capability of the terminal, the terminal looks forward (or expects) to be capable of decoding the downlink transmission with a higher priority, or the terminal preferentially decodes the downlink transmission with a higher priority.

Based on this, in this embodiment, the terminal may determine priorities of the first downlink transmission and the second downlink transmission according to any one of the following (11) to (16).

(11) A priority of a downlink transmission scheduled by a P-RNTI is higher than a priority of a downlink transmission scheduled by an SI-RNTI, and the priority of the downlink transmission scheduled by the P-RNTI is higher than a priority of a downlink transmission scheduled by an RA-RNTI, an Msg B-RNTI, or a TC-RNTI.

(12) The priority of the downlink transmission scheduled by the P-RNTI is higher than the priority of the downlink transmission scheduled by the RA-RNTI, the Msg B-RNTI, or the TC-RNTI, and the priority of the downlink transmission scheduled by the RA-RNTI, the Msg B-RNTI, or the TC-RNTI is higher than the priority of the downlink transmission scheduled by the SI-RNTI.

(13) The priority of the downlink transmission scheduled by the RA-RNTI, the Msg B-RNTI, or the TC-RNTI is higher than the priority of the downlink transmission scheduled by the P-RNTI, and the priority of the downlink transmission scheduled by the P-RNTI is higher than the priority of the downlink transmission scheduled by the SI-RNTI.

(14) The priority of the downlink transmission scheduled by the RA-RNTI, the Msg B-RNTI, or the TC-RNTI is higher than the priority of the downlink transmission scheduled by the SI-RNTI, and the priority of the downlink transmission scheduled by the SI-RNTI is higher than the priority of the downlink transmission scheduled by the P-RNTI.

(15) The priority of the downlink transmission scheduled by the SI-RNTI is higher than the priority of the downlink transmission scheduled by the P-RNTI, and the priority of the downlink transmission scheduled by the P-RNTI is higher than the priority of the downlink transmission scheduled by the RA-RNTI, the Msg B-RNTI, or the TC-RNTI.

(16) The priority of the downlink transmission scheduled by the SI-RNTI is higher than the priority of the downlink transmission scheduled by the RA-RNTI, the Msg B-RNTI, or the TC-RNTI, and the priority of the downlink transmission scheduled by the RA-RNTI, the Msg B-RNTI, or the TC-RNTI is higher than the priority of the downlink transmission scheduled by the P-RNTI.

It should be noted that for the foregoing (11) to (16), if one of the first downlink transmission and the second downlink transmission is scheduled by the TC-RNTI, and the other one of the first downlink transmission and the second downlink transmission is scheduled by the RA-RNTI or the Msg B-RNTI, the terminal may autonomously determine which downlink transmission to be preferentially demodulated. That is, in this embodiment, the priority of the downlink transmission scheduled by the RA-RNTI or the Msg B-RNTI is higher than the priority of the downlink transmission scheduled by the TC-RNTI, or the priority of the downlink transmission scheduled by the TC-RNTI is higher than the priority of the downlink transmission scheduled by the RA-RNTI or the Msg B-RNTI.

In addition, when the first downlink transmission and the second downlink transmission are processed according to the priorities, for another downlink transmission with a lower priority, the terminal is not required to demodulate the downlink transmission with a lower priority, or the terminal does not look forward demodulation of the downlink transmission with a lower priority, or the terminal may skip the downlink transmission with a lower priority.

Manner 2: Skip or not expect (which may be referred to as not look forward) demodulation of a fourth downlink transmission.

The fourth downlink transmission is a downlink transmission that is in the first downlink transmission and the second downlink transmission and is scheduled or scrambled by a second RNTI.

Optionally, in a case that the terminal is in the idle state or the inactive state, the second RNTI may include an SI-RNTI or a paging (Paging, P)-RNTI; or in a case that the terminal is in the connected state, the second RNTI includes a cell C-RNTI, a modulation and coding scheme (Modulation and coding scheme, MSC)-C-RNTI, or a configured scheduling (Configured Scheduling, CS)-RNTI.

In other words, in a case that the first downlink transmission and the second downlink transmission at least partially overlap in time domain and do not overlap in frequency domain, and the total quantity of frequency domain resources occupied by the first downlink transmission and the second downlink transmission is greater than the bandwidth capability of the terminal, and in a case that the terminal is in the idle state or the inactive state, the terminal skips (or does not expect) decoding the downlink transmission scheduled or scrambled by the SI-RNTI or the P-RNTI. In a case that the terminal is in the connected state, the terminal skips (or does not expect) decoding the downlink transmission scheduled or scrambled by the SI-RNTI, or the terminal preferentially decodes the downlink transmission scheduled or scrambled by the C-RNTI (or the MSC-C-RNTI or the CS-RNTI).

Alternatively, the fourth downlink transmission is a downlink transmission with a lower priority in the first downlink transmission and the second downlink transmission. In other words, in a case that the first downlink transmission and the second downlink transmission at least partially overlap in time domain and do not overlap in frequency domain, and the total quantity of frequency domain resources occupied by the first downlink transmission and the second downlink transmission is greater than the bandwidth capability of the terminal, the terminal skips or does not expect the downlink transmission with a lower decoding priority. It should be noted that in this implementation, a manner in which the terminal determines the priorities of the first downlink transmission and the second downlink transmission is similar to the manner 1, that is, as shown in the foregoing (11) to (16), and details are not described herein again.

It should be noted that the terminal does not expect or skips demodulation of the fourth downlink transmission, which may also be understood as that the terminal does not demodulate the fourth downlink transmission. Correspondingly, if the terminal does not demodulate the fourth downlink transmission, the network side also does not receive and demodulate corresponding information. For example, if the fourth downlink transmission is the downlink transmission scheduled by the RA-RNTI, the network side does not receive and demodulate transmission of a corresponding MSG3; and if the fourth downlink transmission is the downlink transmission scheduled by the TC-RNTI, the C-RNTI, the MSC-C-RNTI, and the CS-RNTI, the network side does not receive and demodulate transmission of a corresponding hybrid automatic repeat request acknowledgement (Hybrid automatic repeat request acknowledgement, HARQ-ACK).

In addition, when determining the processing manner of the first downlink transmission and the second downlink transmission, the terminal may implement based on only the manner 1 or the manner 2, or may perform transmission on the first downlink transmission and the second downlink transmission by combining the manner 1 and the manner 2. This is not limited herein.

Manner 3: Demodulate the first downlink transmission and/or the second downlink transmission according to implementation information of the terminal.

The implementation information of the terminal may be downlink transmission processing information preset in the terminal at delivery, or may be communication process information initiated by the terminal. This is not limited herein.

For example, when the implementation information of the terminal is the downlink transmission processing information preset in the terminal at delivery of the terminal, the downlink transmission processing information preset in the terminal may be that when the first downlink transmission and the second downlink transmission at least partially overlap in time domain and do not overlap in frequency domain, and the total quantity of frequency domain resources occupied by the first downlink transmission and the second downlink transmission is greater than the bandwidth capability of the terminal, the terminal preferentially processes the downlink transmission scheduled or scrambled by a specified RNTI (such as the SI-RNTI and the C-RNTI). This is not limited herein.

For another example, when the implementation information of the terminal is the communication process initiated by the terminal, the communication process initiated by the terminal may be a random access procedure. In an implementation, it is assumed that the communication process initiated by the terminal is the random access procedure, in a case that the terminal initiates the random access procedure, the terminal demodulates the first downlink transmission and skips the second downlink transmission, where the first downlink transmission is scheduled by a third RNTI, and the second downlink transmission is scheduled by a fourth RNTI. The third RNTI includes the RA-RNTI, or the Msg B-RNTI, or the TC-RNTI, and the fourth RNTI includes the SI-RNTI, or the P-RNTI, or the C-RNTI, or the MCS-C-RNTI, or the CS-RNTI, or a multicast/broadcast service control channel (Multicast/Broadcast Service Control Channel, MCCH)-RNTI, or a group (Group, G)-RNTI.

Manner 4: Demodulate the first downlink transmission or the second downlink transmission according to position information of the frequency domain resources occupied by the first downlink transmission and the second downlink transmission.

In an implementation, the terminal may demodulate a fifth downlink transmission. The fifth downlink transmission is a downlink transmission in which the frequency domain resources occupied by the first downlink transmission and the second downlink transmission greatly overlap with a specified frequency domain resource.

The specified frequency domain resource includes at least one of a frequency domain resource occupied by a synchronization signal block (Synchronization Signal Block, SSB), a frequency domain resource occupied by a control resource set (Control resource set #0, CORSET #0), a frequency domain resource predefined by a protocol, a frequency domain resource configured by SI, or a frequency domain resource configured by RRC information.

Manner 5: Demodulate the first downlink transmission and the second downlink transmission in a case that a first condition is satisfied.

Optionally, the first condition may include, but is not limited to, at least one of the following (21) to (27).

(21) One of the first downlink transmission and the second downlink transmission is scheduled by an SI-RNTI or a P-RNTI, and the other downlink transmission is scheduled by any one of the SI-RNTI, the P-RNTI, an RA-RATI, and a TC-RNTI.

(22) The first downlink transmission and the second downlink transmission are respectively scheduled by any one of the SI-RNTI, the P-RNTI, the RA-RATI, and the TC-RNTI.

(23) At least one of the first downlink transmission or the second downlink transmission is scheduled by the SI-RNTI or the P-RNTI.

(24) A total transport block (Transport Block, TB) size corresponding to the first downlink transmission and the second downlink transmission does not exceed a first predetermined value.

In an implementation, the first predetermined value is determined according to a capability of the terminal, that is, the first predetermined value depends on the capability of the terminal, and the terminal reports the first predetermined value to the network-side device after determining the first predetermined value, to ensure consistency of communication.

In another implementation, the first predetermined value may alternatively be predefined by a protocol or implemented by a network agreement. For example, the first predetermined value may include: If the SCS is 30 kHz, the first predetermined value may be 5000 bits; and if the SCS is 15 kHz, the first predetermined value may be 10,000 bits.

(25) A total peak data rate (peak data rate) of the first downlink transmission and the second downlink transmission does not exceed a second predetermined value.

Similar to the foregoing first predetermined value, the second predetermined value may also be determined according to the capability of the terminal, or may be predefined by the protocol or implemented by the network agreement. When the second predetermined value is predefined by the protocol or implemented by the network agreement, the second predetermined value may be 10 Mbps.

In addition, in a case that the second predetermined value is determined according to the capability of the terminal, the terminal may report the second predetermined value to the network-side device, to ensure consistency of communication.

(26) A sixth downlink transmission is not received in a predetermined quantity of time units after a target time unit, where the target time unit is a time unit in which the first downlink transmission and the second downlink transmission are located.

The sixth downlink transmission includes a downlink transmission scheduled by at least one of the C-RNTI, the MSC-C-RNTI, the CS-RNTI, the RA-RNTI, the TC-RNTI, the MCH-RNTI, or the G-RNTI, and the downlink transmission may alternatively be the PDSCH or the like. This is not limited herein.

The time unit may be a slot, a sub-slot, a symbol, a sub-frame, and the like. This is not limited herein.

The predetermined quantity may be determined according to the capability of the terminal, or may be predefined by the protocol or implemented by the network agreement. When the predetermined quantity is predefined by the protocol or implemented by the network agreement, the predetermined quantity may be two slots, 14 symbols, or the like.

In addition, in a case that the predetermined quantity is determined according to the capability of the terminal, the terminal may report the predetermined quantity to the network-side device, to ensure consistency of communication.

(27) A sum of frequency domain resources occupied by the first downlink transmission and the second downlink transmission does not exceed M, where M is greater than N, and M is less than or equal to 20 MHz.

A value of M may be determined according to the capability of the terminal, or may be predefined by the protocol or implemented by the network agreement. where In addition, in a case that the predetermined quantity is determined according to the capability of the terminal, the terminal may report the value of M to the network-side device, to ensure consistency of communication.

It should be noted that in a downlink transmission process, the first downlink transmission and the second downlink transmission that are scheduled or configured by the network-side device should not cause the following cases to occur: The first downlink transmission and the second downlink transmission partially or completely overlap in time domain, and do not overlap in frequency domain (that is, are located in different PRBs), and a total of frequency domain resources used by the first downlink transmission and the second downlink transmission exceed N (for example, 5 MHz). In other words, if a case that the first downlink transmission and the second downlink transmission at least partially overlap in time domain but do not overlap in frequency domain, and the total quantity of frequency domain resources occupied by the first downlink transmission and the second downlink transmission is greater than the bandwidth capability of the terminal occurs, it may be considered that the case occurs when the network-side device performs an erroneous scheduling or configuration behavior. In this case, in addition to processing the first downlink transmission and the second downlink transmission as described in S311 above, the terminal may not perform any operation, that is, a terminal behavior is not defined.

Certainly, the terminal does not expect that only a sum of frequency domain resources used in frequency domain by the received first downlink transmission and second downlink transmission exceeds a bandwidth capability of the terminal.

In this implementation, not only the terminal can effectively process the plurality of received downlink transmissions, thereby ensuring communication quality, but also can loosen a limitation on network scheduling. In other words, the network can schedule two downlink transmissions, so that the two downlink transmissions partially or completely overlap in time domain and are located at a PRB that does not overlap in frequency domain. In addition, a sum of resources used by the two downlink transmissions in frequency domain may exceed a maximum bandwidth capability supported by the terminal, and processing complexity of the terminal for two downlink transmissions whose total resources in frequency domain exceed the maximum bandwidth capability is loosened, and important transmission is preferentially demodulated, thereby ensuring communication performance.

S312: In a case that the first downlink transmission and the second downlink transmission at least partially overlap in time domain and do not overlap in frequency domain, and the total quantity of frequency domain resources occupied by the first downlink transmission and the second downlink transmission is not greater than the bandwidth capability of the terminal, the processing manner determined by the terminal includes a second processing manner, and the second processing manner includes at least one of the following manner 1 to manner 3.

Manner 1: Decode the first downlink transmission and the second downlink transmission in a case that the terminal is in the idle state or the inactive state, and the first downlink transmission and the second downlink transmission are respectively scheduled by any one of the SI-RNTI, the P-RNTI, the RA-RATI, and the TC-RNTI.

In other words, in a case that the first downlink transmission and the second downlink transmission at least partially overlap in time domain and do not overlap in frequency domain, and the total quantity of frequency domain resources occupied by the first downlink transmission and the second downlink transmission is not greater than the bandwidth capability of the terminal, the terminal in the idle state or the inactive state can (expect or look forward) decode the first downlink transmission and the second downlink transmission that are scheduled by any one of the SI-RNTI, the P-RNTI, the RA-RATI, and the TC-RNTI.

Manner 2: Decode the first downlink transmission and the second downlink transmission in a case that the terminal is in the connected state, where the first downlink transmission is scheduled by the C-RNTI, the CS-C-RNTI, or the CS-RNTI, and the second downlink transmission is scheduled by the SI-RNTI.

In other words, in a case that the first downlink transmission and the second downlink transmission at least partially overlap in time domain and do not overlap in frequency domain, and the total quantity of frequency domain resources occupied by the first downlink transmission and the second downlink transmission is not greater than the bandwidth capability of the terminal, the terminal in the connected state can (expect, look forward, or prioritize) decode the first downlink transmission scheduled by the C-RNTI, the CS-C-RNTI, or the CS-RNTI, and the second downlink transmission scheduled by the SI-RNTI.

Manner 3: Skip the sixth downlink transmission in a case that the terminal is in the connected state, where the sixth downlink transmission is a downlink transmission that is in the first downlink transmission and the second downlink transmission and is scheduled by the C-RNTI, the CS-C-RNTI, or the CS-RNTI, and processing time of the sixth downlink transmission is required to be less than a third predetermined value.

In other words, in a case that the first downlink transmission and the second downlink transmission at least partially overlap in time domain and do not overlap in frequency domain, and the total quantity of frequency domain resources occupied by the first downlink transmission and the second downlink transmission is not greater than the bandwidth capability of the terminal, if the processing time of the first downlink transmission and the second downlink transmission that are scheduled by the C-RNTI, the CS-C-RNTI, or the CS-RNTI is required to be less than the third predetermined value, the terminal in the connected state skips (does not look forward or expect) the downlink transmission that is in the first downlink transmission and the second downlink transmission and is scheduled by the C-RNTI, the CS-C-RNTI, or the CS-RNTI.

The third predetermined value may be implemented in a manner such as specified in a protocol and configured at a higher layer. For example, in an implementation, the third predetermined value may be based on a PDSCH processing capability 2 (PDSCH processing capability 2) specified in TS38.214. This is not specifically limited in this embodiment.

It may be understood that, for the first downlink transmission and the second downlink transmission mentioned in the foregoing embodiments, in a possible implementation, the first downlink transmission and the second downlink transmission satisfy any one of the following (31) to (35). In other words, a combination form of the first downlink transmission and the second downlink transmission may be any one of the following (31) to (35).

(31) One of the first downlink transmission and the second downlink transmission is a physical downlink shared channel PDSCH scheduled by the P-RNTI, and the other one of the first downlink transmission and the second downlink transmission is a PDSCH scheduled by any one of the SI-RNTI, the MCCH-RNTI, a broadcast (broadcast G) G-RNTI, a multicast (multicast) G-RNTI, the TC-RNTI, the C-RNTI, the MCS-C-RNTI, and the CS-RNTI;

(32) one of the first downlink transmission and the second downlink transmission is a PDSCH scheduled by the SI-RNTI, and the other one of the first downlink transmission and the second downlink transmission is a PDSCH scheduled by any one of the P-RNTI, the MCH-RNTI, the broadcast G-RNTI, the multicast G-RNTI, the TC-RNTI, the C-RNTI, the MCS-C-RNTI, and the CS-RNTI;

(33) one of the first downlink transmission and the second downlink transmission is a PDSCH scheduled by the RA-RNTI, and the other one of the first downlink transmission and the second downlink transmission is a PDSCH scheduled by any one of the SI-RNTI, the P-RNTI, the MCH-RNTI, the broadcast G-RNTI, and the multicast G-RNTI;

(34) one of the first downlink transmission and the second downlink transmission is a PDSCH scheduled by the TC-RNTI, and the other one of the first downlink transmission and the second downlink transmission is a PDSCH scheduled by any one of the SI-RNTI, the P-RNTI, the MCCH-RNTI, the broadcast G-RNTI, and the multicast G-RNTI; and

(35) one of the first downlink transmission and the second downlink transmission is a physical broadcast channel PBCH, and the other one of the first downlink transmission and the second downlink transmission is a PDSCH scheduled by the MCCH-RNTI.

Certainly, in an actual downlink transmission process, a combination of the first downlink transmission and the second downlink transmission may be, but is not limited to, those shown in the foregoing (31) to (35). This is not limited herein.

Further, based on the foregoing description of the downlink transmission method, a terminal in different states or modes (for example, an idle state, an inactive state, and a connected state) is described below with reference to Example 1 and Example 2 for an implementation process of the downlink transmission provided in this embodiment. The content is as follows.

### Example 1:

It is assumed that the terminal is in an RRC_IDLE or an RRC_INACTIVE mode, the bandwidth capability N of the terminal is 5 MHz, and M is 20 MHz, and the first downlink transmission and the second downlink transmission at least partially overlap in time domain and do not overlap in frequency domain. In this case:

(41) If a sum of frequency domain resources used by the first downlink transmission and the second downlink transmission is not greater than N=5 MHZ (which is alternatively referred to as a quantity of PRBs not greater than 25 for a 15 KHz SCS, and a quantity of PRBs not greater than 11 or 12 for a 30 KHz SCS), the terminal can decode the first downlink transmission and the second downlink transmission according to the manner 1 in S132.

(42) If a sum of frequency domain resources used by the first downlink transmission and the second downlink transmission is greater than N=5 MHZ (which is alternatively referred to as a quantity of PRBs greater than 25 for a 15 KHz SCS, and a quantity of PRBs greater than 11 or 12 for a 30 KHz SCS), the terminal can process the first downlink transmission and the second downlink transmission according to at least one of the manner 1 to the manner 5 shown in S131.

For a specific implementation process of (41) to (42), refer to related descriptions in the foregoing S131 and S132. To avoid repetition, details are not described herein again.

### Example 2:

It is assumed that the terminal is in an RRC_ACTIVE mode, the bandwidth capability N of the terminal is 5 MHz, and M is 20 MHz, the first downlink transmission and the second downlink transmission at least partially overlap in time domain and do not overlap in frequency domain, and the first downlink transmission and the second downlink transmission are both PDSCHs, on a cell in a frequency range 1, in an SI acquisition process triggered by the P-RNTI. In this case:

(51) If a sum of frequency domain resources used by the first downlink transmission and the second downlink transmission is not greater than N = 5 MHZ (which is alternatively referred to as a quantity of PRBs not greater than 25 for a 15 KHz SCS, and a quantity of PRBs not greater than 11 or 12 for a 30 KHz SCS), the terminal can decode the first downlink transmission and the second downlink transmission according to the manner 2 and/or the manner 3 in S132.

(52) If a sum of frequency domain resources used by the first downlink transmission and the second downlink transmission is greater than N=5 MHZ (which is alternatively referred to as a quantity of PRBs greater than 25 for a 15 KHz SCS, and a quantity of PRBs greater than 11 or 12 for a 30 KHz SCS), the terminal can process the first downlink transmission and the second downlink transmission according to at least one of the manner 1 to the manner 5 shown in S131.

For a specific implementation process of (51) to (52), refer to related descriptions in the foregoing S131 and S132. To avoid repetition, details are not described herein again.

It should be noted that in a downlink transmission process, for a case in which the first downlink transmission and the second downlink transmission at least partially overlap in time domain but do not overlap in frequency domain, and the total quantity of frequency domain resources occupied by the first downlink transmission and the second downlink transmission is not greater than or greater than the bandwidth capability of the terminal, the terminal may use, but is not limited to, the processing manners in the foregoing Example 1 and Example 2. This is not limited in this embodiment herein.

In addition, for the implementations mentioned in this embodiment, such as the implementation processes involved in the foregoing first processing manner and second processing manner, the processing manner selected by the terminal may be specified in a protocol, or configured at a high layer or a network side, or may be independently determined by the terminal, and the determined processing manner is sent to the network side, to ensure consistency between the network side and the terminal side, thereby improving communication quality.

In this embodiment, in a case that the first downlink transmission and the second downlink transmission at least partially overlap in time domain but do not overlap in frequency domain, the behavior of the terminal is defined by determining the relationship between the total quantity of frequency domain resources occupied by the first downlink transmission and the second downlink transmission and the bandwidth capability of the terminal. The terminal can effectively process the plurality of received downlink transmissions, thereby ensuring communication quality, and a limitation on network scheduling may also be loosened. In other words, the network can schedule two downlink transmission, so that the two downlink transmission partially or completely overlap in time domain, and are located in a PRB that does not overlap in frequency domain. In addition, a sum of resources used by the two downlink transmission in frequency domain may exceed a maximum bandwidth capability supported by the terminal. In addition, processing complexity of the terminal for two downlink transmission whose total resource in frequency domain exceeds the maximum bandwidth capability of the terminal is loosened, and important transmission is preferentially demodulated, thereby ensuring communication performance.

FIG. 4 is a schematic flowchart of a downlink transmission method 400 according to an exemplary embodiment of this application. The method 400 may be, but is not limited to, performed by a network-side device, and may be specifically performed by hardware and/or software installed in the network-side device. In this embodiment, the method 400 may include at least the following steps.

S410: A network-side device sends a first downlink transmission and a second downlink transmission to a terminal.

The first downlink transmission and the second downlink transmission at least partially overlap in time domain but do not overlap in frequency domain, and a bandwidth capability of the terminal is N, and N is less than 20 MHz.

Optionally, in a case that a total quantity of frequency domain resources occupied by the first downlink transmission and the second downlink transmission is greater than a bandwidth capability of the terminal, the network-side device performs an erroneous scheduling or configuration behavior.

Optionally, the bandwidth capability of the terminal includes at least one of the following: a receiving bandwidth N1 of the terminal, where N1 is not greater than 20 MHz; a cache bandwidth N2 of the terminal, where N2 is not greater than 20 MHz; or a processing bandwidth N3 of the terminal, where N3 is not greater than 5 MHz.

It may be understood that, each implementation mentioned in the method embodiment 400 has the same or corresponding technical feature with an implementation mentioned in the foregoing method embodiment 200 or 300. Therefore, for an implementation process of each implementation mentioned in the method embodiment 400, refer to related descriptions in the method embodiment 200 or 300, and the same or corresponding technical effects are achieved. To avoid repetition, details are not described herein again.

For the downlink transmission methods 200 to 400 provided in embodiments of this application, an execution body may be a downlink transmission apparatus. In embodiments of this application, an example in which the downlink transmission apparatus executes the downlink transmission methods 200 to 400 is used to describe the downlink transmission apparatus provided in embodiments of this application.

FIG. 5 is a schematic structural diagram of a downlink transmission apparatus 500 according to an exemplary embodiment of this application. The apparatus 500 includes: a processing module 510, configured to: determine, in a case that a first downlink transmission and a second downlink transmission at least partially overlap in time domain but do not overlap in frequency domain, a processing manner of the first downlink transmission and the second downlink transmission according to whether a total quantity of frequency domain resources occupied by the first downlink transmission and the second downlink transmission is greater than a bandwidth capability of a terminal, where the bandwidth capability of the terminal is N, and N is less than 20 MHz.

Optionally, the apparatus 500 further includes a receiving module, configured to receive the first downlink transmission and the second downlink transmission.

Optionally, that the processing module determines the processing manner of the first downlink transmission and the second downlink transmission according to whether the total quantity of frequency domain resources occupied by the first downlink transmission and the second downlink transmission is greater than the bandwidth capability of the terminal includes: in a case that the total quantity of frequency domain resources occupied by the first downlink transmission and the second downlink transmission is greater than the bandwidth capability of the terminal, the determined processing manner includes at least one of the following: expecting or prioritizing demodulation of a third downlink transmission, where the third downlink transmission is a downlink transmission that is in the first downlink transmission and the second downlink transmission and is scheduled by a first RNTI, or the third downlink transmission is a downlink transmission with a higher priority in the first downlink transmission and the second downlink transmission; skipping or not expecting demodulation of a fourth downlink transmission, where the fourth downlink transmission is a downlink transmission that is in the first downlink transmission and the second downlink transmission and is scheduled or scrambled by a second RNTI, or the fourth downlink transmission is a downlink transmission with a lower priority in the first downlink transmission and the second downlink transmission; demodulating the first downlink transmission and/or the second downlink transmission according to implementation information of the terminal; demodulating the first downlink transmission or the second downlink transmission according to position information of the frequency domain resources occupied by the first downlink transmission and the second downlink transmission; or demodulating the first downlink transmission and the second downlink transmission in a case that a first condition is satisfied.

Optionally, the first radio network temporary identifier RNTI and the second RNTI satisfy any one of the following: in a case that the terminal is in an idle state or an inactive state, the first RNTI includes a random access RA-RNTI, a message B Msg B-RNTI, or a temporary cell TC-RNTI, and the second RNTI includes a system information SI-RNTI or a paging P-RNTI; and in a case that the terminal is in a connected state, the first RNTI includes the SI-RNTI, and the second RNTI includes a cell C-RNTI, a modulation and coding scheme MCS-C-RNTI, or a configured scheduling CS-RNTI.

Optionally, the priorities of the first downlink transmission and the second downlink transmission are determined according to any one of the following: a priority of a downlink transmission scheduled by a P-RNTI is higher than a priority of a downlink transmission scheduled by an SI-RNTI, and the priority of the downlink transmission scheduled by the SI-RNTI is higher than a priority of a downlink transmission scheduled by an RA-RNTI, an Msg B-RNTI, or a TC-RNTI; the priority of the downlink transmission scheduled by the P-RNTI is higher than the priority of the downlink transmission scheduled by the RA-RNTI, the Msg B-RNTI, or the TC-RNTI, and the priority of the downlink transmission scheduled by the RA-RNTI, the Msg B-RNTI, or the TC-RNTI is higher than the priority of the downlink transmission scheduled by the SI-RNTI; the priority of the downlink transmission scheduled by the RA-RNTI, the Msg B-RNTI, or the TC-RNTI is higher than the priority of the downlink transmission scheduled by the P-RNTI, and the priority of the downlink transmission scheduled by the P-RNTI is higher than the priority of the downlink transmission scheduled by the SI-RNTI; the priority of the downlink transmission scheduled by the RA-RNTI, the Msg B-RNTI, or the TC-RNTI is higher than the priority of the downlink transmission scheduled by the SI-RNTI, and the priority of the downlink transmission scheduled by the SI-RNTI is higher than the priority of the downlink transmission scheduled by the P-RNTI; the priority of the downlink transmission scheduled by the SI-RNTI is higher than the priority of the downlink transmission scheduled by the P-RNTI, and the priority of the downlink transmission scheduled by the P-RNTI is higher than the priority of the downlink transmission scheduled by the RA-RNTI, the Msg B-RNTI, or the TC-RNTI; and the priority of the downlink transmission scheduled by the SI-RNTI is higher than the priority of the downlink transmission scheduled by the RA-RNTI, the Msg B-RNTI, or the TC-RNTI, and the priority of the downlink transmission scheduled by the RA-RNTI, the Msg B-RNTI, or the TC-RNTI is higher than the priority of the downlink transmission scheduled by the P-RNTI.

Optionally, the priority of the downlink transmission scheduled by the RA-RNTI or the Msg B-RNTI is higher than the priority of the downlink transmission scheduled by the TC-RNTI, or the priority of the downlink transmission scheduled by the TC-RNTI is higher than the priority of the downlink transmission scheduled by the RA-RNTI or the Msg B-RNTI.

Optionally, the demodulating the first downlink transmission and/or the second downlink transmission according to implementation information of the terminal includes: demodulating, by the terminal in a case that the terminal initiates a random access procedure, the first downlink transmission and skipping the second downlink transmission, where the first downlink transmission is scheduled by a third RNTI, and the second downlink transmission is scheduled by a fourth RNTI. The third RNTI includes an RA-RNTI, an Msg B-RNTI, or a TC-RNTI, and the fourth RNTI includes an SI-RNTI, a P-RNTI, a C-RNTI, an MCS-C-RNTI, a CS-RNTI, an MCCH-RNTI, or a G-RNTI.

Optionally, the demodulating the first downlink transmission or the second downlink transmission according to position information of the frequency domain resources occupied by the first downlink transmission and the second downlink transmission includes: demodulating a fifth downlink transmission, where the fifth downlink transmission is a downlink transmission in which the frequency domain resources occupied by the first downlink transmission and the second downlink transmission greatly overlap with a specified frequency domain resource.

Optionally, the specified frequency domain resource includes at least one of a frequency domain resource occupied by a synchronization signal block SSB, a frequency domain resource occupied by a control resource set CORSET #0, a frequency domain resource predefined by a protocol, a frequency domain resource configured by SI, or a frequency domain resource configured by radio resource control RRC information.

Optionally, the first condition includes at least one of the following: one downlink transmission of the first downlink transmission and the second downlink transmission is scheduled by an SI-RNTI or a P-RNTI, and the other downlink transmission of the first downlink transmission and the second downlink transmission is scheduled by any one of the SI-RNTI, the P-RNTI, an RA-RATI, and a TC-RNTI; the first downlink transmission and the second downlink transmission are respectively scheduled by any one of the SI-RNTI, the P-RNTI, the RA-RATI, and the TC-RNTI; at least one of the first downlink transmission or the second downlink transmission is scheduled by the SI-RNTI or the P-RNTI; a total transport block size corresponding to the first downlink transmission and the second downlink transmission does not exceed a first predetermined value; a total peak data rate of the first downlink transmission and the second downlink transmission does not exceed a second predetermined value; a sixth downlink transmission is not received in a predetermined quantity of time units after a target time unit, where the target time unit is a time unit in which the first downlink transmission and the second downlink transmission are located, and the sixth downlink transmission includes a downlink transmission scheduled by at least one of the C-RNTI, the MCS-C-RNTI, the CS-RNTI, the RA-RNTI, the TC-RNTI, the MCH-RNTI, or the G-RNTI; or a sum of frequency domain resources occupied by the first downlink transmission and the second downlink transmission does not exceed M, where M is greater than N, and M is less than or equal to 20 MHz.

Optionally, that the processing module determines the processing manner of the first downlink transmission and the second downlink transmission according to whether the total quantity of frequency domain resources occupied by the first downlink transmission and the second downlink transmission is greater than the bandwidth capability of the terminal further includes: in a case that the total quantity of frequency domain resources occupied by the first downlink transmission and the second downlink transmission is not greater than the bandwidth capability of the terminal, the processing manner determined by the terminal including at least one of the following: decoding the first downlink transmission and the second downlink transmission in a case that the terminal is in the idle state or the inactive state, where the first downlink transmission and the second downlink transmission are respectively scheduled by any one of the SI-RNTI, the P-RNTI, the RA-RATI, and the TC-RNTI; decoding the first downlink transmission and the second downlink transmission in a case that the terminal is in the connected state, where the first downlink transmission is scheduled by the C-RNTI, the CS-C-RNTI, or the CS-RNTI, and the second downlink transmission is scheduled by the SI-RNTI; or skipping the sixth downlink transmission in a case that the terminal is in the connected state, where the sixth downlink transmission is a downlink transmission that is in the first downlink transmission and the second downlink transmission and is scheduled by the C-RNTI, the CS-C-RNTI, or the CS-RNTI, and processing time of the sixth downlink transmission is required to be less than a third predetermined value.

Optionally, the bandwidth capability of the terminal includes at least one of the following: a receiving bandwidth N1 of the terminal, where N1 is not greater than 20 MHz; a cache bandwidth N2 of the terminal, where N2 is not greater than 20 MHz; or a processing bandwidth N3 of the terminal, where N3 is not greater than 5 MHz.

Optionally, a case that the first downlink transmission and the second downlink transmission at least partially overlap in time domain but do not overlap in frequency domain, and the total quantity of frequency domain resources occupied by the first downlink transmission and the second downlink transmission is greater than the bandwidth capability of the terminal occurs when a network-side device performs an erroneous scheduling or configuration behavior.

Optionally, the first downlink transmission and the second downlink transmission satisfy any one of the following: one of the first downlink transmission and the second downlink transmission is a physical downlink shared channel PDSCH scheduled by the P-RNTI, and the other one of the first downlink transmission and the second downlink transmission is a PDSCH scheduled by any one of the SI-RNTI, the multicast/broadcast service control channel MCCH-RNTI, a broadcast G-RNTI, a multicast G-RNTI, the TC-RNTI, the C-RNTI, the MSC-C-RNTI, and the CS-RNTI; one of the first downlink transmission and the second downlink transmission is a PDSCH scheduled by the SI-RNTI, and the other one of the first downlink transmission and the second downlink transmission is a PDSCH scheduled by any one of the P-RNTI, the MCH-RNTI, the broadcast G-RNTI, the multicast G-RNTI, the TC-RNTI, the C-RNTI, the MCS-C-RNTI, and the CS-RNTI; one of the first downlink transmission and the second downlink transmission is a PDSCH scheduled by the RA-RNTI, and the other one of the first downlink transmission and the second downlink is a PDSCH scheduled by any one of the SI-RNTI, the P-RNTI, the MCCH-RNTI, the broadcast G-RNTI, and the multicast G-RNTI; one of the first downlink transmission and the second downlink transmission is a PDSCH scheduled by the TC-RNTI, and the other one of the first downlink transmission and the second downlink transmission is a PDSCH scheduled by any one of the SI-RNTI, the P-RNTI, the MCCH-RNTI, the broadcast G-RNTI, and the multicast G-RNTI; and one of the first downlink transmission and the second downlink transmission is a physical broadcast channel PBCH, and the other one of the first downlink transmission and the second downlink transmission is a PDSCH scheduled by the MCCH-RNTI.

The downlink transmission apparatus 500 in embodiments of this application may be an electronic device, for example, an electronic device having an operating system, or may be a component, for example, an integrated circuit or a chip in an electronic device. The electronic device may be a terminal or may be another device other than a terminal. For example, the terminal may include, but is not limited to, the type of the terminal 11 listed above, and another device may be a server, a network attached storage (Network Attached Storage, NAS), and the like. This is not specifically limited in embodiments of this application.

The downlink transmission apparatus 500 provided in embodiments of this application can implement all processes implemented by the method embodiments from FIG. 2 to FIG. 3, and achieve the same technical effects. To avoid repetition, details are not described herein again.

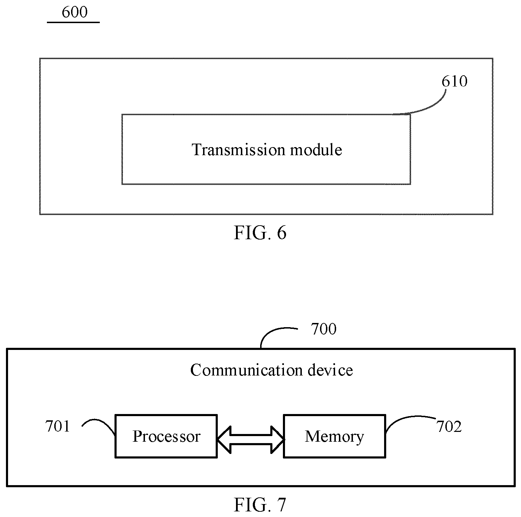

FIG. 6 is a schematic structural diagram of a downlink transmission apparatus 600 according to an exemplary embodiment of this application. The apparatus 600 includes: a transmission module 610, configured to send a first downlink transmission and a second downlink transmission to a terminal, where the first downlink transmission and the second downlink transmission at least partially overlap in time domain but do not overlap in frequency domain, and a bandwidth capability of the terminal is N, and N is less than 20 MHz.

Optionally, the apparatus 600 further includes a determining module, configured to determine, according to the bandwidth capability of the terminal, a total quantity of frequency domain resources occupied by the first downlink transmission and the second downlink transmission.

Optionally, in a case that a total quantity of frequency domain resources occupied by the first downlink transmission and the second downlink transmission is greater than the bandwidth capability of the terminal, a network-side device performs an erroneous scheduling or configuration behavior.

Optionally, the bandwidth capability of the terminal includes at least one of the following: a receiving bandwidth N1 of the terminal, where N1 is not greater than 20 MHz; a cache bandwidth N2 of the terminal, where N2 is not greater than 20 MHz; or a processing bandwidth N3 of the terminal, where N3 is not greater than 5 MHz.

The downlink transmission apparatus 600 in embodiments of this application may be a network-side device, or may be a component in a network-side device for example, an integrated circuit or a chip. For example, the network-side device may include, but is not limited to, the type of the network-side device 12 listed above. This is not specifically limited in embodiments of this application.

The downlink transmission apparatus 600 provided in embodiments of this application can implement all processes implemented by the method embodiments of FIG. 4, and achieve the same technical effects. To avoid repetition, details are not described herein again.

As shown in FIG. 7, an embodiment of this application further provides a communication device 700, including a processor 701 and a memory 702, where the memory 702 stores a program or instructions executable on the processor 701. For example, when the communication device 700 is a terminal, the program or instructions is executed by the processor 701 to implement the steps of the foregoing method embodiments 200 to 400, and the same technical effects can be achieved. When the communication device 700 is a network-side device, the program or the instructions is executed by the processor 701 to implement the steps of the foregoing method embodiments 200 to 400, and the same technical effects can be achieved. To avoid repetition, details are not described herein again.

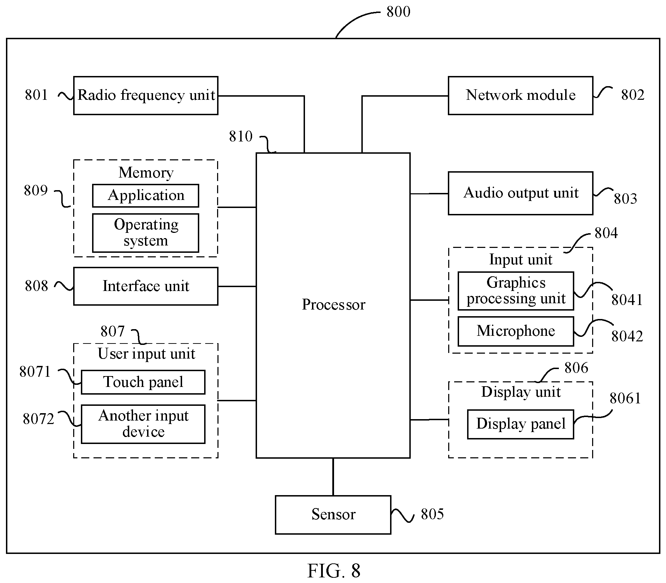

An embodiment of this application further provides a terminal, including a processor and a communication interface, where the communication interface is coupled to the processor, and the processor is configured to run a program or instructions, to implement the steps of the method described in the method embodiments 200 to 300. The terminal embodiment corresponds to the foregoing terminal side method embodiment, and the various implementation processes and implementations of the foregoing method embodiments can be applied to the terminal embodiment, and can achieve the same technical effects. Specifically, FIG. 8 is a schematic diagram of a hardware structure of a terminal that implements embodiments of this application.

The terminal 800 includes, but is not limited to: at least some components such as a radio frequency unit 801, a network module 802, an audio output unit 803, an input unit 804, a sensor 805, a display unit 806, a user input unit 807, an interface unit 808, a memory 809, and a processor 810.

A person skilled in the art may understand that the terminal 800 further includes a power supply (such as a battery) for supplying power to the components. The power supply may be logically connected to the processor 810 by using a power supply management system, thereby implementing functions, such as charging, discharging, and power consumption management, by using the power supply management system. A terminal structure shown in FIG. 8 does not constitute a limitation on the terminal, and the terminal may include more or fewer components than those shown in the figure, or some components may be combined, or a different component deployment may be used. Details are not described herein again.

It should be understood that, in embodiments of this application, the input unit 804 may include a graphics processing unit (Graphics Processing Unit, GPU) 1041 and a microphone 8042. The graphics processing unit 8041 performs processing on image data of a static picture or a video that is obtained by an image acquisition apparatus (for example, a camera) in a video acquisition mode or an image acquisition mode. The display unit 806 may include a display panel 8061, for example, the display panel 8061 may be configured in a form such as a liquid crystal display or an organic light-emitting diode. The user input unit 807 includes at least one of a touch panel 8071 and another input device 8072. The touch panel 8071 is also referred to as a touch screen. The touch panel 8071 may include two parts: a touch detection apparatus and a touch controller. The another input device 8072 may include, but is not limited to, a physical keyboard, a functional key (such as a volume control key or a switch key), a track ball, a mouse, and a joystick, and details are not described herein again.

In embodiments of this application, the radio frequency unit 801 receives downlink data from a network-side device and then transmits the downlink data to the processor 810 for processing. In addition, the radio frequency unit 801 may send uplink data to the network-side device. Generally, the radio frequency unit 801 includes, but is not limited to, an antenna, an amplifier, a transceiver, a coupler, a low noise amplifier, a duplexer, and the like.

The memory 809 may be configured to store a software program or instructions and various data. The memory 809 may mainly include a first storage region for storing a program or instructions and a second storage region for storing data. The first storage region may store an operating system, an application program or instructions required by at least one function (for example, a sound playback function and an image playback function), or the like. In addition, the memory 809 may include a volatile memory or a non-volatile memory, or the memory 809 may include both a volatile memory and a non-volatile memory. The non-volatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM), or a flash memory. The volatile memory may be a random access memory (Random Access Memory, RAM), a static RAM (Static RAM, SRAM), a dynamic RAM (Dynamic RAM, DRAM), a synchronous DRAM (Synchronous DRAM, SDRAM), a double data rate SDRAM (Double Data Rate SDRAM, DDR SDRAM), an enhanced SDRAM (Enhanced SDRAM, ESDRAM), a synch link DRAM (Synch link DRAM, SLDRAM), and a direct rambus RAM (Direct Rambus RAM, DRRAM). The memory 809 in embodiments of this application includes, but is not limited to, these memories and any other suitable types of memories.

The processor 810 may include one or more processing units. Optionally, the processor 810 integrates an application processor and a modem processor. The application processor mainly processes operations related to an operating system, a user interface, and an application program. The modem processor mainly processes a wireless communication signal, such as a baseband processor. It may be understood that, the foregoing modem processor may not be integrated into the processor 810.

The processor 810 is configured to: determine, in a case that a first downlink transmission and a second downlink transmission at least partially overlap in time domain but do not overlap in frequency domain, a processing manner of the first downlink transmission and the second downlink transmission according to whether a total quantity of frequency domain resources occupied by the first downlink transmission and the second downlink transmission is greater than a bandwidth capability of a terminal, where the bandwidth capability of the terminal is N, and N is less than 20 MHz.

Optionally, that the processor 810 determines the processing manner of the first downlink transmission and the second downlink transmission according to whether the total quantity of frequency domain resources occupied by the first downlink transmission and the second downlink transmission is greater than the bandwidth capability of the terminal includes: in a case that the total quantity of frequency domain resources occupied by the first downlink transmission and the second downlink transmission is greater than the bandwidth capability of the terminal, the determined processing manner includes at least one of the following: expecting or prioritizing demodulation of a third downlink transmission, where the third downlink transmission is a downlink transmission that is in the first downlink transmission and the second downlink transmission and is scheduled by a first RNTI, or the third downlink transmission is a downlink transmission with a higher priority in the first downlink transmission and the second downlink transmission; skipping or not expecting demodulation of a fourth downlink transmission, where the fourth downlink transmission is a downlink transmission that is in the first downlink transmission and the second downlink transmission and is scheduled or scrambled by a second RNTI, or the fourth downlink transmission is a downlink transmission with a lower priority in the first downlink transmission and the second downlink transmission; demodulating the first downlink transmission and/or the second downlink transmission according to implementation information of the terminal; demodulating the first downlink transmission or the second downlink transmission according to position information of the frequency domain resources occupied by the first downlink transmission and the second downlink transmission; or demodulating the first downlink transmission and the second downlink transmission in a case that a first condition is satisfied.

Optionally, the first radio network temporary identifier RNTI and the second RNTI satisfy any one of the following: in a case that the terminal is in an idle state or an inactive state, the first RNTI includes a random access RA-RNTI, a message B Msg B-RNTI, or a temporary cell TC-RNTI, and the second RNTI includes a system information SI-RNTI or a paging P-RNTI; and in a case that the terminal is in a connected state, the first RNTI includes the SI-RNTI, and the second RNTI includes a cell C-RNTI, a modulation and coding scheme MCS-C-RNTI, or a configured scheduling CS-RNTI.

Optionally, the priorities of the first downlink transmission and the second downlink transmission are determined according to any one of the following: a priority of a downlink transmission scheduled by a P-RNTI is higher than a priority of a downlink transmission scheduled by an SI-RNTI, and the priority of the downlink transmission scheduled by the SI-RNTI is higher than a priority of a downlink transmission scheduled by an RA-RNTI, an Msg B-RNTI, or a TC-RNTI; the priority of the downlink transmission scheduled by the P-RNTI is higher than the priority of the downlink transmission scheduled by the RA-RNTI, the Msg B-RNTI, or the TC-RNTI, and the priority of the downlink transmission scheduled by the RA-RNTI, the Msg B-RNTI, or the TC-RNTI is higher than the priority of the downlink transmission scheduled by the SI-RNTI; the priority of the downlink transmission scheduled by the RA-RNTI, the Msg B-RNTI, or the TC-RNTI is higher than the priority of the downlink transmission scheduled by the P-RNTI, and the priority of the downlink transmission scheduled by the P-RNTI is higher than the priority of the downlink transmission scheduled by the SI-RNTI; the priority of the downlink transmission scheduled by the RA-RNTI, the Msg B-RNTI, or the TC-RNTI is higher than the priority of the downlink transmission scheduled by the SI-RNTI, and the priority of the downlink transmission scheduled by the SI-RNTI is higher than the priority of the downlink transmission scheduled by the P-RNTI; the priority of the downlink transmission scheduled by the SI-RNTI is higher than the priority of the downlink transmission scheduled by the P-RNTI, and the priority of the downlink transmission scheduled by the P-RNTI is higher than the priority of the downlink transmission scheduled by the RA-RNTI, the Msg B-RNTI, or the TC-RNTI; and the priority of the downlink transmission scheduled by the SI-RNTI is higher than the priority of the downlink transmission scheduled by the RA-RNTI, the Msg B-RNTI, or the TC-RNTI, and the priority of the downlink transmission scheduled by the RA-RNTI, the Msg B-RNTI, or the TC-RNTI is higher than the priority of the downlink transmission scheduled by the P-RNTI.

Optionally, the priority of the downlink transmission scheduled by the RA-RNTI or the Msg B-RNTI is higher than the priority of the downlink transmission scheduled by the TC-RNTI, or the priority of the downlink transmission scheduled by the TC-RNTI is higher than the priority of the downlink transmission scheduled by the RA-RNTI or the Msg B-RNTI.

Optionally, the demodulating the first downlink transmission and/or the second downlink transmission according to implementation information of the terminal includes: demodulating, by the terminal in a case that the terminal initiates a random access procedure, the first downlink transmission and skipping the second downlink transmission, where the first downlink transmission is scheduled by a third RNTI, and the second downlink transmission is scheduled by a fourth RNTI. The third RNTI includes an RA-RNTI, an Msg B-RNTI, or a TC-RNTI, and the fourth RNTI includes an SI-RNTI, a P-RNTI, a C-RNTI, an MCS-C-RNTI, a CS-RNTI, an MCCH-RNTI, or a G-RNTI.

Optionally, the demodulating the first downlink transmission or the second downlink transmission according to position information of the frequency domain resources occupied by the first downlink transmission and the second downlink transmission includes: demodulating a fifth downlink transmission, where the fifth downlink transmission is a downlink transmission in which the frequency domain resources occupied by the first downlink transmission and the second downlink transmission greatly overlap with a specified frequency domain resource.

Optionally, the specified frequency domain resource includes at least one of a frequency domain resource occupied by a synchronization signal block SSB, a frequency domain resource occupied by a control resource set CORSET #0, a frequency domain resource predefined by a protocol, a frequency domain resource configured by SI, or a frequency domain resource configured by radio resource control RRC information.

Optionally, the first condition includes at least one of the following: one downlink transmission of the first downlink transmission and the second downlink transmission is scheduled by an SI-RNTI or a P-RNTI, and the other downlink transmission of the first downlink transmission and the second downlink transmission is scheduled by any one of the SI-RNTI, the P-RNTI, an RA-RATI, and a TC-RNTI; the first downlink transmission and the second downlink transmission are respectively scheduled by any one of the SI-RNTI, the P-RNTI, the RA-RATI, and the TC-RNTI; at least one of the first downlink transmission or the second downlink transmission is scheduled by the SI-RNTI or the P-RNTI; a total transport block size corresponding to the first downlink transmission and the second downlink transmission does not exceed a first predetermined value; a total peak data rate of the first downlink transmission and the second downlink transmission does not exceed a second predetermined value; a sixth downlink transmission is not received in a predetermined quantity of time units after a target time unit, where the target time unit is a time unit in which the first downlink transmission and the second downlink transmission are located, and the sixth downlink transmission includes a downlink transmission scheduled by at least one of the C-RNTI, the MCS-C-RNTI, the CS-RNTI, the RA-RNTI, the TC-RNTI, the MCH-RNTI, or the G-RNTI; or a sum of frequency domain resources occupied by the first downlink transmission and the second downlink transmission does not exceed M, where M is greater than N, and M is less than or equal to 20 MHz.

Optionally, that the processor 810 determines the processing manner of the first downlink transmission and the second downlink transmission according to whether the total quantity of frequency domain resources occupied by the first downlink transmission and the second downlink transmission is greater than the bandwidth capability of the terminal further includes: in a case that the total quantity of frequency domain resources occupied by the first downlink transmission and the second downlink transmission is not greater than the bandwidth capability of the terminal, the processing manner determined by the terminal including at least one of the following: decoding the first downlink transmission and the second downlink transmission in a case that the terminal is in the idle state or the inactive state, where the first downlink transmission and the second downlink transmission are respectively scheduled by any one of the SI-RNTI, the P-RNTI, the RA-RATI, and the TC-RNTI; decoding the first downlink transmission and the second downlink transmission in a case that the terminal is in the connected state, where the first downlink transmission is scheduled by the C-RNTI, the CS-C-RNTI, or the CS-RNTI, and the second downlink transmission is scheduled by the SI-RNTI; or skipping the sixth downlink transmission in a case that the terminal is in the connected state, where the sixth downlink transmission is a downlink transmission that is in the first downlink transmission and the second downlink transmission and is scheduled by the C-RNTI, the CS-C-RNTI, or the CS-RNTI, and processing time of the sixth downlink transmission is required to be less than a third predetermined value.

Optionally, the bandwidth capability of the terminal includes at least one of the following: a receiving bandwidth N1 of the terminal, where N1 is not greater than 20 MHz; a cache bandwidth N2 of the terminal, where N2 is not greater than 20 MHz; or a processing bandwidth N3 of the terminal, where N3 is not greater than 5 MHz.

Optionally, a case that the first downlink transmission and the second downlink transmission at least partially overlap in time domain but do not overlap in frequency domain, and the total quantity of frequency domain resources occupied by the first downlink transmission and the second downlink transmission is greater than the bandwidth capability of the terminal occurs when a network-side device performs an erroneous scheduling or configuration behavior.

Optionally, the first downlink transmission and the second downlink transmission satisfy any one of the following: one of the first downlink transmission and the second downlink transmission is a physical downlink shared channel PDSCH scheduled by the P-RNTI, and the other one of the first downlink transmission and the second downlink transmission is a PDSCH scheduled by any one of the SI-RNTI, the multicast/broadcast service control channel MCCH-RNTI, a broadcast G-RNTI, a multicast G-RNTI, the TC-RNTI, the C-RNTI, the MSC-C-RNTI, and the CS-RNTI; one of the first downlink transmission and the second downlink transmission is a PDSCH scheduled by the SI-RNTI, and the other one of the first downlink transmission and the second downlink transmission is a PDSCH scheduled by any one of the P-RNTI, the MCH-RNTI, the broadcast G-RNTI, the multicast G-RNTI, the TC-RNTI, the C-RNTI, the MCS-C-RNTI, and the CS-RNTI; one of the first downlink transmission and the second downlink transmission is a PDSCH scheduled by the RA-RNTI, and the other one of the first downlink transmission and the second downlink is a PDSCH scheduled by any one of the SI-RNTI, the P-RNTI, the MCCH-RNTI, the broadcast G-RNTI, and the multicast G-RNTI; one of the first downlink transmission and the second downlink transmission is a PDSCH scheduled by the TC-RNTI, and the other one of the first downlink transmission and the second downlink transmission is a PDSCH scheduled by any one of the SI-RNTI, the P-RNTI, the MCCH-RNTI, the broadcast G-RNTI, and the multicast G-RNTI; and one of the first downlink transmission and the second downlink transmission is a physical broadcast channel PBCH, and the other one of the first downlink transmission and the second downlink transmission is a PDSCH scheduled by the MCCH-RNTI.

It may be understood that an implementation process of each implementation provided in this embodiment has the same or corresponding technical feature with each implementation in the foregoing method embodiments 200 to 300. Therefore, for an implementation process of each implementation provided in this embodiment, refer to related descriptions of each implementation in the foregoing method embodiments 200 to 300, and the same or corresponding technical effects are achieved. To avoid repetition, details are not described herein again.

An embodiment of this application further provides a network-side device, including a processor and a communication interface, where the communication interface is coupled to the processor, and the processor is configured to run a program or instructions, to implement the steps in the method embodiment 400. The network-side device embodiment corresponds to the foregoing network-side device method embodiment, and the various implementation processes and implementations of the foregoing method embodiments can be applied to the network-side device embodiment, and can achieve the same technical effects.

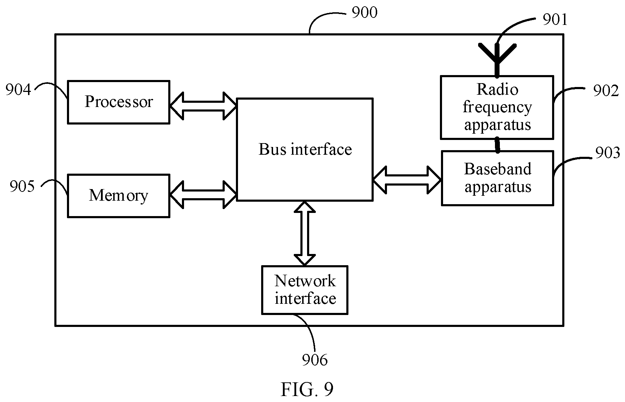

Specifically, an embodiment of this application further provides a network-side device. As shown in FIG. 9, the network-side device 900 includes: an antenna 901, a radio frequency apparatus 902, a baseband apparatus 903, a processor 904, and a memory 905. The antenna 901 is connected to the radio frequency apparatus 902. In an uplink direction, the radio frequency apparatus 902 receives information through the antenna 901 and sends the received information to the baseband apparatus 903 for processing. In a downlink direction, the baseband apparatus 903 processes information that needs to be sent and sends the information to the radio frequency apparatus 902. The radio frequency apparatus 902 processes the received information and sends the received information through the antenna 901.

The method executed by the network-side device in the foregoing embodiment may be implemented in the baseband apparatus 903. The baseband apparatus 903 includes a baseband processor.

The baseband apparatus 903 may include, for example, at least one baseband plate. A plurality of chips are disposed on the baseband plate. As shown in FIG. 9, one of the plurality of chips is, for example, the baseband processor, and is connected to the memory 905 through a bus interface, to invoke a program in the memory 905 to perform a network device operation shown in the foregoing method embodiment.

The network-side device may further include a network interface 906, and the interface is, for example, a common public radio interface (common public radio interface, CPRI).

Specifically, the network-side device 900 in embodiments of this application further includes: instructions or a program stored in the memory 905 and executable on the processor 904. The processor 904 invokes the instructions or program in the memory 905 to perform the methods executed by each module shown in FIG. 6, and can achieve the same technical effects. To avoid repetition, details are not described herein again.

An embodiment of this application further provides a readable storage medium, storing a program or instructions. The program or instructions, when executed by a processor, implement all processes of the foregoing downlink transmission method embodiments 200 to 400, and the same technical effects can be achieved. To avoid repetition, details are not described herein again.

The processor is a processor in the terminal in the foregoing embodiments. The readable storage medium includes a computer-readable storage medium, for example, a computer read-only memory ROM, a random access memory RAM, a magnetic disk, or an optical disc.

An embodiment of this application further provides a chip, including a processor and a communication interface, where the communication interface is coupled to the processor, and the processor is configured to run a program or instructions of a network-side device, to implement all processes of the foregoing downlink transmission method embodiments 200 to 400, and can achieve the same technical effects. To avoid repetition, details are not described herein again.

It should be understood that, the chip described in embodiments of this application may also be referred to as a system-level chip, a system chip, a chip system, a system on chip, or the like.

An embodiment of this application further provides a computer program product. The computer program product includes a processor, a memory, and a program or instructions stored on the memory and executable on the processor. The program or instructions, when executed by the processor, implement all processes of the foregoing downlink transmission method embodiments 200 to 400, and can achieve the same technical effects. To avoid repetition, details are not described herein again.

An embodiment of this application further provides a wireless communication system. The system includes: a terminal and a network-side device, where the terminal may be configured to perform the steps of the downlink transmission method embodiments 200 to 300 as described above, and the network-side device may be configured to perform the steps of the downlink transmission method embodiment 400 as described above, and the same technical effects can be achieved. To avoid repetition, details are not described herein again.

It should be noted that, the term "include", "comprise" or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Without more limitations, elements defined by the sentence "including one" does not exclude that there are still other same elements in the processes, methods, objects, or apparatuses. In addition, it should be noted that the scope of the methods and apparatuses in embodiments of this application is not limited to performing the functions in the order shown or discussed, but also can include performing the functions in basically a same way or in the opposite order according to the functions involved, for example, the described methods may be performed in a different order from the described ones, and various steps can also be added, omitted, or combined. In addition, features described with reference to some examples may be combined in other examples.

Through the descriptions of the foregoing implementations, a person skilled in the art may clearly understand that the method according to the foregoing embodiments may be implemented by means of software and a necessary general hardware platform, and certainly, may alternatively be implemented by hardware, but in many cases, the former manner is a better implementation. Based on such an understanding, the technical solutions in this application essentially or a part that contributes to the related art may be implemented in the form of a computer software product. The computer software product is stored in a storage medium (for example, a ROM/RAM, a magnetic disk, or an optical disc), and includes several instructions for instructing a terminal (which may be a mobile phone, a computer, a server, a network device, or the like) to perform the method described in embodiments of this application.

Embodiments of this application are described above with reference to the accompanying drawings, but this application is not limited to the foregoing specific implementations. The foregoing specific implementations are merely exemplary and not limitative. Under the inspiration of this application, a person of ordinary skill in the art may make various variations without departing from the scope of this application and the protection of the claims, and such variations shall fall within the protection of this application.

## Claims

1. A downlink transmission method, comprising:
in a case that a first downlink transmission and a second downlink transmission at least partially overlap in time domain but do not overlap in frequency domain, determining, by a terminal, a processing manner of the first downlink transmission and the second downlink transmission according to whether a total quantity of frequency domain resources occupied by the first downlink transmission and the second downlink transmission is greater than a bandwidth capability of the terminal, wherein
the bandwidth capability of the terminal is N, and N is less than or equal to 20 MHz.

2. The method according to claim 1, wherein the determining, by a terminal, a processing manner of the first downlink transmission and the second downlink transmission according to whether a total quantity of frequency domain resources occupied by the first downlink transmission and the second downlink transmission is greater than a bandwidth capability of the terminal comprises:
in a case that the total quantity of frequency domain resources occupied by the first downlink transmission and the second downlink transmission is greater than the bandwidth capability of the terminal, the processing manner determined by the terminal comprising at least one of the following:
expecting or prioritizing demodulation of a third downlink transmission, wherein the third downlink transmission is a downlink transmission that is in the first downlink transmission and the second downlink transmission and is scheduled by a first radio network temporary identifier RNTI, or the third downlink transmission is a downlink transmission with a higher priority in the first downlink transmission and the second downlink transmission;
skipping or not expecting demodulation of a fourth downlink transmission, wherein the fourth downlink transmission is a downlink transmission that is in the first downlink transmission and the second downlink transmission and is scheduled or scrambled by a second RNTI, or the fourth downlink transmission is a downlink transmission with a lower priority in the first downlink transmission and the second downlink transmission;
demodulating the first downlink transmission and/or the second downlink transmission according to implementation information of the terminal;
demodulating the first downlink transmission or the second downlink transmission according to position information of the frequency domain resources occupied by the first downlink transmission and the second downlink transmission; or
demodulating the first downlink transmission and the second downlink transmission in a case that a first condition is satisfied.

3. The method according to claim 2, wherein the first RNTI and the second RNTI satisfy any one of the following:
in a case that the terminal is in an idle state or an inactive state, the first RNTI comprises a random access RA-RNTI, a message B Msg B-RNTI, or a temporary cell TC-RNTI, and the second RNTI comprises a system information SI-RNTI or a paging P-RNTI; and
in a case that the terminal is in a connected state, the first RNTI comprises the SI-RNTI, and the second RNTI comprises a cell C-RNTI, a modulation and coding scheme MCS-C-RNTI, or a configured scheduling CS-RNTI.

4. The method according to claim 2, wherein priorities of the first downlink transmission and the second downlink transmission are determined according to any one of the following:
a priority of a downlink transmission scheduled by a P-RNTI is higher than a priority of a downlink transmission scheduled by an SI-RNTI, and the priority of the downlink transmission scheduled by the SI-RNTI is higher than a priority of a downlink transmission scheduled by an RA-RNTI, an Msg B-RNTI, or a TC-RNTI;
the priority of the downlink transmission scheduled by the P-RNTI is higher than the priority of the downlink transmission scheduled by the RA-RNTI, the Msg B-RNTI, or the TC-RNTI, and the priority of the downlink transmission scheduled by the RA-RNTI, the Msg B-RNTI, or the TC-RNTI is higher than the priority of the downlink transmission scheduled by the SI-RNTI;
the priority of the downlink transmission scheduled by the RA-RNTI, the Msg B-RNTI, or the TC-RNTI is higher than the priority of the downlink transmission scheduled by the P-RNTI, and the priority of the downlink transmission scheduled by the P-RNTI is higher than the priority of the downlink transmission scheduled by the SI-RNTI;
the priority of the downlink transmission scheduled by the RA-RNTI, the Msg B-RNTI, or the TC-RNTI is higher than the priority of the downlink transmission scheduled by the SI-RNTI, and the priority of the downlink transmission scheduled by the SI-RNTI is higher than the priority of the downlink transmission scheduled by the P-RNTI;
the priority of the downlink transmission scheduled by the SI-RNTI is higher than the priority of the downlink transmission scheduled by the P-RNTI, and the priority of the downlink transmission scheduled by the P-RNTI is higher than the priority of the downlink transmission scheduled by the RA-RNTI, the Msg B-RNTI, or the TC-RNTI; and
the priority of the downlink transmission scheduled by the SI-RNTI is higher than the priority of the downlink transmission scheduled by the RA-RNTI, the Msg B-RNTI, or the TC-RNTI, and the priority of the downlink transmission scheduled by the RA-RNTI, the Msg B-RNTI, or the TC-RNTI is higher than the priority of the downlink transmission scheduled by the P-RNTI.

5. The method according to claim 4, wherein the priority of the downlink transmission scheduled by the RA-RNTI or the Msg B-RNTI is higher than the priority of the downlink transmission scheduled by the TC-RNTI, or the priority of the downlink transmission scheduled by the TC-RNTI is higher than the priority of the downlink transmission scheduled by the RA-RNTI or the Msg B-RNTI.

6. The method according to claim 2, wherein the demodulating the first downlink transmission and/or the second downlink transmission according to implementation information of the terminal comprises:
demodulating, by the terminal in a case that the terminal initiates a random access procedure, the first downlink transmission and skipping the second downlink transmission, wherein the first downlink transmission is scheduled by a third RNTI, and the second downlink transmission is scheduled by a fourth RNTI; and
the third RNTI comprises an RA-RNTI, an Msg B-RNTI, or a TC-RNTI, and the fourth RNTI comprises an SI-RNTI, a P-RNTI, a C-RNTI, an MCS-C-RNTI, a CS-RNTI, a multicast/broadcast service control channel MCCH-RNTI, or a group G-RNTI.

7. The method according to claim 2, wherein the demodulating the first downlink transmission or the second downlink transmission according to position information of the frequency domain resources occupied by the first downlink transmission and the second downlink transmission comprises:
demodulating a fifth downlink transmission, wherein the fifth downlink transmission is a downlink transmission in which the frequency domain resources occupied by the first downlink transmission and the second downlink transmission greatly overlap with a specified frequency domain resource.

8. The method according to claim 7, wherein the specified frequency domain resource comprises at least one of a frequency domain resource occupied by a synchronization signal block SSB, a frequency domain resource occupied by a control resource set CORSET #0, a frequency domain resource predefined by a protocol, a frequency domain resource configured by SI, or a frequency domain resource configured by radio resource control RRC information.

9. The method according to claim 2, wherein the first condition comprises at least one of the following:
one downlink transmission of the first downlink transmission and the second downlink transmission is scheduled by an SI-RNTI or a P-RNTI, and the other downlink transmission of the first downlink transmission and the second downlink transmission is scheduled by any one of the SI-RNTI, the P-RNTI, an RA-RATI, and a TC-RNTI;
the first downlink transmission and the second downlink transmission are respectively scheduled by any one of the SI-RNTI, the P-RNTI, the RA-RATI, and the TC-RNTI;
at least one of the first downlink transmission or the second downlink transmission is scheduled by the SI-RNTI or the P-RNTI;
a total transport block size corresponding to the first downlink transmission and the second downlink transmission does not exceed a first predetermined value;
a total peak data rate of the first downlink transmission and the second downlink transmission does not exceed a second predetermined value;
a sixth downlink transmission is not received in a predetermined quantity of time units after a target time unit, wherein the target time unit is a time unit in which the first downlink transmission and the second downlink transmission are located, and the sixth downlink transmission comprises a downlink transmission scheduled by at least one of a C-RNTI, an MCS-C-RNTI, a CS-RNTI, the RA-RNTI, the TC-RNTI, an MCCH-RNTI, or a G-RNTI; or
a sum of frequency domain resources occupied by the first downlink transmission and the second downlink transmission does not exceed M, wherein M is greater than N, and M is less than or equal to 20 MHz.

10. The method according to any one of claims 1 to 9, wherein the determining, by a terminal, a processing manner of the first downlink transmission and the second downlink transmission according to whether a total quantity of frequency domain resources occupied by the first downlink transmission and the second downlink transmission is greater than a bandwidth capability of the terminal further comprises:
in a case that the total quantity of frequency domain resources occupied by the first downlink transmission and the second downlink transmission is not greater than the bandwidth capability of the terminal, the processing manner determined by the terminal comprising at least one of the following:
decoding the first downlink transmission and the second downlink transmission in a case that the terminal is in an idle state or an inactive state, wherein the first downlink transmission and the second downlink transmission are respectively scheduled by any one of an SI-RNTI, a P-RNTI, an RA-RATI, and a TC-RNTI;
decoding the first downlink transmission and the second downlink transmission in a case that the terminal is in a connected state, wherein the first downlink transmission is scheduled by a C-RNTI, a CS-C-RNTI, or a CS-RNTI, and the second downlink transmission is scheduled by an SI-RNTI; or
skipping a sixth downlink transmission in a case that the terminal is in the connected state, wherein the sixth downlink transmission is a downlink transmission that is in the first downlink transmission and the second downlink transmission and is scheduled by the C-RNTI, the CS-C-RNTI, or the CS-RNTI, and processing time of the sixth downlink transmission is required to be less than a third predetermined value.

11. The method according to any one of claims 2 to 10, wherein the bandwidth capability of the terminal comprises at least one of the following:
a receiving bandwidth N1 of the terminal, wherein N1 is not greater than 20 MHz;
a cache bandwidth N2 of the terminal, wherein N2 is not greater than 20 MHz; or
a processing bandwidth N3 of the terminal, wherein N3 is not greater than 5 MHz.

12. The method according to any one of claims 2 to 11, wherein a case that the first downlink transmission and the second downlink transmission at least partially overlap in time domain but do not overlap in frequency domain, and the total quantity of frequency domain resources occupied by the first downlink transmission and the second downlink transmission is greater than the bandwidth capability of the terminal occurs when a network-side device performs an erroneous scheduling or configuration behavior.

13. The method according to any one of claims 1 to 12, wherein the first downlink transmission and the second downlink transmission satisfy any one of the following:
one of the first downlink transmission and the second downlink transmission is a physical downlink shared channel PDSCH scheduled by a P-RNTI, and the other one of the first downlink transmission and the second downlink transmission is a PDSCH scheduled by any one of an SI-RNTI, an MCCH-RNTI, a broadcast G-RNTI, a multicast G-RNTI, a TC-RNTI, a C-RNTI, an MCS-C-RNTI, and a CS-RNTI;
one of the first downlink transmission and the second downlink transmission is a PDSCH scheduled by the SI-RNTI, and the other one of the first downlink transmission and the second downlink transmission is a PDSCH scheduled by any one of the P-RNTI, the MCCH-RNTI, the broadcast G-RNTI, the multicast G-RNTI, the TC-RNTI, the C-RNTI, the MCS-C-RNTI, and the CS-RNTI;
one of the first downlink transmission and the second downlink transmission is a PDSCH scheduled by an RA-RNTI, and the other one of the first downlink transmission and the second downlink is a PDSCH scheduled by any one of the SI-RNTI, the P-RNTI, the MCCH-RNTI, the broadcast G-RNTI, and the multicast G-RNTI;
one of the first downlink transmission and the second downlink transmission is a PDSCH scheduled by the TC-RNTI, and the other one of the first downlink transmission and the second downlink transmission is a PDSCH scheduled by any one of the SI-RNTI, the P-RNTI, the MCCH-RNTI, the broadcast G-RNTI, and the multicast G-RNTI; and
one of the first downlink transmission and the second downlink transmission is a physical broadcast channel PBCH, and the other one of the first downlink transmission and the second downlink transmission is a PDSCH scheduled by the MCCH-RNTI.

14. A downlink transmission method, comprising:
sending, by a network-side device, a first downlink transmission and a second downlink transmission to a terminal, wherein
the first downlink transmission and the second downlink transmission at least partially overlap in time domain but do not overlap in frequency domain, and a bandwidth capability of the terminal is N, and N is less than 20 MHz.

15. The method according to claim 14, wherein in a case that a total quantity of frequency domain resources occupied by the first downlink transmission and the second downlink transmission is greater than the bandwidth capability of the terminal, the network-side device performs an erroneous scheduling or configuration behavior.

16. The method according to claim 14 or 15, wherein the bandwidth capability of the terminal comprises at least one of the following:
a receiving bandwidth N1 of the terminal, wherein N1 is not greater than 20 MHz;
a cache bandwidth N2 of the terminal, wherein N2 is not greater than 20 MHz; or
a processing bandwidth N3 of the terminal, wherein N3 is not greater than 5 MHz.

17. A downlink transmission apparatus, comprising:
a processing module, configured to: determine, in a case that a first downlink transmission and a second downlink transmission at least partially overlap in time domain but do not overlap in frequency domain, a processing manner of the first downlink transmission and the second downlink transmission according to whether a total quantity of frequency domain resources occupied by the first downlink transmission and the second downlink transmission is greater than a bandwidth capability of a terminal, wherein
the bandwidth capability of the terminal is N, and N is less than 20 MHz.

18. The apparatus according to claim 17, wherein the determining, by the processing module according to whether a total quantity of frequency domain resources occupied by the first downlink transmission and the second downlink transmission is greater than a bandwidth capability of a terminal, a processing manner of the first downlink transmission and the second downlink transmission comprises:
in a case that the total quantity of frequency domain resources occupied by the first downlink transmission and the second downlink transmission is greater than the bandwidth capability of the terminal, the determined processing manner comprises at least one of the following:
expecting or prioritizing demodulation of a third downlink transmission, wherein the third downlink transmission is a downlink transmission that is in the first downlink transmission and the second downlink transmission and is scheduled by a first radio network temporary identifier RNTI, or the third downlink transmission is a downlink transmission with a higher priority in the first downlink transmission and the second downlink transmission;
skipping or not expecting demodulation of a fourth downlink transmission, wherein the fourth downlink transmission is a downlink transmission that is in the first downlink transmission and the second downlink transmission and is scheduled or scrambled by a second RNTI, or the fourth downlink transmission is a downlink transmission with a lower priority in the first downlink transmission and the second downlink transmission;
demodulating the first downlink transmission and/or the second downlink transmission according to implementation information of the terminal;
demodulating the first downlink transmission or the second downlink transmission according to position information of the frequency domain resources occupied by the first downlink transmission and the second downlink transmission; or
demodulating the first downlink transmission and the second downlink transmission in a case that a first condition is satisfied.

19. The apparatus according to claim 18, wherein the first RNTI and the second RNTI satisfy any one of the following:
in a case that the terminal is in an idle state or an inactive state, the first RNTI comprises a random access RA-RNTI, a message B Msg B-RNTI, or a temporary cell TC-RNTI, and the second RNTI comprises a system information SI-RNTI or a paging P-RNTI; and
in a case that the terminal is in a connected state, the first RNTI comprises the SI-RNTI, and the second RNTI comprises a cell C-RNTI, a modulation and coding scheme MCS-C-RNTI, or a configured scheduling CS-RNTI.

20. The apparatus according to claim 18, wherein priorities of the first downlink transmission and the second downlink transmission are determined according to any one of the following:
a priority of a downlink transmission scheduled by a P-RNTI is higher than a priority of a downlink transmission scheduled by an SI-RNTI, and the priority of the downlink transmission scheduled by the SI-RNTI is higher than a priority of a downlink transmission scheduled by an RA-RNTI, an Msg B-RNTI, or a TC-RNTI;
a priority of a downlink transmission scheduled by the P-RNTI is higher than a priority of a downlink transmission scheduled by the RA-RNTI, the Msg B-RNTI, or the TC-RNTI, and the priority of the downlink transmission scheduled by the RA-RNTI, the Msg B-RNTI, or the TC-RNTI is higher than a priority of a downlink transmission scheduled by the SI-RNTI;
a priority of a downlink transmission scheduled by the RA-RNTI, the Msg B-RNTI, or the TC-RNTI is higher than a priority of a downlink transmission scheduled by the P-RNTI, and the priority of the downlink transmission scheduled by the P-RNTI is higher than a priority of a downlink transmission scheduled by the SI-RNTI;
a priority of a downlink transmission scheduled by the RA-RNTI, the Msg B-RNTI, or the TC-RNTI is higher than a priority of a downlink transmission scheduled by the SI-RNTI, and the priority of the downlink transmission scheduled by the SI-RNTI is higher than a priority of a downlink transmission scheduled by the P-RNTI;
a priority of a downlink transmission scheduled by the SI-RNTI is higher than a priority of a downlink transmission scheduled by the P-RNTI, and the priority of the downlink transmission scheduled by the P-RNTI is higher than a priority of a downlink transmission scheduled by the RA-RNTI, the Msg B-RNTI, or the TC-RNTI; and
a priority of a downlink transmission scheduled by the SI-RNTI is higher than a priority of a downlink transmission scheduled by the RA-RNTI, the Msg B-RNTI, or the TC-RNTI, and the priority of the downlink transmission scheduled by the RA-RNTI, the Msg B-RNTI, or the TC-RNTI is higher than a priority of a downlink transmission scheduled by the P-RNTI.

21. The apparatus according to claim 20, wherein the priority of the downlink transmission scheduled by the RA-RNTI or the Msg B-RNTI is higher than the priority of the downlink transmission scheduled by the TC-RNTI, or the priority of the downlink transmission scheduled by the TC-RNTI is higher than the priority of the downlink transmission scheduled by the RA-RNTI or the Msg B-RNTI.

22. The apparatus according to claim 18, wherein the demodulating the first downlink transmission and/or the second downlink transmission according to implementation information of the terminal comprises:
demodulating, by the terminal in a case that the terminal initiates a random access procedure, the first downlink transmission and skipping the second downlink transmission, wherein the first downlink transmission is scheduled by a third RNTI, and the second downlink transmission is scheduled by a fourth RNTI; and
the third RNTI comprises an RA-RNTI, an Msg B-RNTI, or a TC-RNTI, and the fourth RNTI comprises an SI-RNTI, a P-RNTI, a C-RNTI, an MCS-C-RNTI, a CS-RNTI, a multicast/broadcast service control channel MCCH-RNTI, or a group G-RNTI.

23. The apparatus according to claim 18, wherein the demodulating the first downlink transmission or the second downlink transmission according to position information of the frequency domain resources occupied by the first downlink transmission and the second downlink transmission comprises:
demodulating a fifth downlink transmission, wherein the fifth downlink transmission is a downlink transmission in which the frequency domain resources occupied by the first downlink transmission and the second downlink transmission greatly overlap with a specified frequency domain resource.

24. The apparatus according to claim 23, wherein the specified frequency domain resource comprises at least one of a frequency domain resource occupied by a synchronization signal block SSB, a frequency domain resource occupied by a control resource set CORSET #0, a frequency domain resource predefined by a protocol, a frequency domain resource configured by SI, or a frequency domain resource configured by radio resource control RRC information.

25. The apparatus according to claim 18, wherein the first condition comprises at least one of the following:
one downlink transmission of the first downlink transmission and the second downlink transmission is scheduled by an SI-RNTI or a P-RNTI, and the other downlink transmission of the first downlink transmission and the second downlink transmission is scheduled by any one of the SI-RNTI, the P-RNTI, an RA-RATI, and a TC-RNTI;
the first downlink transmission and the second downlink transmission are respectively scheduled by any one of the SI-RNTI, the P-RNTI, the RA-RATI, and the TC-RNTI;
at least one of the first downlink transmission or the second downlink transmission is scheduled by the SI-RNTI or the P-RNTI;
a total transport block size corresponding to the first downlink transmission and the second downlink transmission does not exceed a first predetermined value;
a total peak data rate of the first downlink transmission and the second downlink transmission does not exceed a second predetermined value;
a sixth downlink transmission is not received in a predetermined quantity of time units after a target time unit, wherein the target time unit is a time unit in which the first downlink transmission and the second downlink transmission are located, and the sixth downlink transmission comprises a downlink transmission scheduled by at least one of a C-RNTI, an MCS-C-RNTI, a CS-RNTI, the RA-RNTI, the TC-RNTI, an MCCH-RNTI, or a G-RNTI; or
a sum of frequency domain resources occupied by the first downlink transmission and the second downlink transmission does not exceed M, wherein M is greater than N, and M is less than or equal to 20 MHz.

26. The apparatus according to any one of claims 17 to 25, wherein the determining, by the processing module according to whether a total quantity of frequency domain resources occupied by the first downlink transmission and the second downlink transmission is greater than a bandwidth capability of a terminal, a processing manner of the first downlink transmission and the second downlink transmission further comprises:
in a case that the total quantity of frequency domain resources occupied by the first downlink transmission and the second downlink transmission is not greater than the bandwidth capability of the terminal, the processing manner determined by the terminal comprising at least one of the following:
decoding the first downlink transmission and the second downlink transmission in a case that the terminal is in an idle state or an inactive state, wherein the first downlink transmission and the second downlink transmission are respectively scheduled by any one of an SI-RNTI, a P-RNTI, an RA-RATI, and a TC-RNTI;
decoding the first downlink transmission and the second downlink transmission in a case that the terminal is in a connected state, wherein the first downlink transmission is scheduled by a C-RNTI, a CS-C-RNTI, or a CS-RNTI, and the second downlink transmission is scheduled by an SI-RNTI; or
skipping a sixth downlink transmission in a case that the terminal is in the connected state, wherein the sixth downlink transmission is a downlink transmission that is in the first downlink transmission and the second downlink transmission and is scheduled by the C-RNTI, the CS-C-RNTI, or the CS-RNTI, and processing time of the sixth downlink transmission is required to be less than a third predetermined value.

27. The apparatus according to any one of claims 17 to 26, wherein the bandwidth capability of the terminal comprises at least one of the following:
a receiving bandwidth N1 of the terminal, wherein N1 is not greater than 20 MHz;
a cache bandwidth N2 of the terminal, wherein N2 is not greater than 20 MHz; or
a processing bandwidth N3 of the terminal, wherein N3 is not greater than 5 MHz.

28. The apparatus according to any one of claims 17 to 27, wherein a case that the first downlink transmission and the second downlink transmission at least partially overlap in time domain but do not overlap in frequency domain, and the total quantity of frequency domain resources occupied by the first downlink transmission and the second downlink transmission is greater than the bandwidth capability of the terminal occurs when a network-side device performs an erroneous scheduling or configuration behavior.

29. The apparatus according to any one of claims 17 to 28, wherein the first downlink transmission and the second downlink transmission satisfy any one of the following:
one of the first downlink transmission and the second downlink transmission is a physical downlink shared channel PDSCH scheduled by a P-RNTI, and the other one of the first downlink transmission and the second downlink transmission is a PDSCH scheduled by any one of an SI-RNTI, an MCCH-RNTI, a broadcast G-RNTI, a multicast G-RNTI, a TC-RNTI, a C-RNTI, an MCS-C-RNTI, and a CS-RNTI;
one of the first downlink transmission and the second downlink transmission is a PDSCH scheduled by the SI-RNTI, and the other one of the first downlink transmission and the second downlink transmission is a PDSCH scheduled by any one of the P-RNTI, the MCH-RNTI, the broadcast G-RNTI, the multicast G-RNTI, the TC-RNTI, the C-RNTI, the MCS-C-RNTI, and the CS-RNTI;
one of the first downlink transmission and the second downlink transmission is a PDSCH scheduled by an RA-RNTI, and the other one of the first downlink transmission and the second downlink is a PDSCH scheduled by any one of the SI-RNTI, the P-RNTI, the MCCH-RNTI, the broadcast G-RNTI, and the multicast G-RNTI;
one of the first downlink transmission and the second downlink transmission is a PDSCH scheduled by the TC-RNTI, and the other one of the first downlink transmission and the second downlink transmission is a PDSCH scheduled by any one of the SI-RNTI, the P-RNTI, the MCCH-RNTI, the broadcast G-RNTI, and the multicast G-RNTI; and
one of the first downlink transmission and the second downlink transmission is a physical broadcast channel PBCH, and the other one of the first downlink transmission and the second downlink transmission is a PDSCH scheduled by the MCCH-RNTI.

30. A downlink transmission apparatus, comprising:
a transmission module, configured to send a first downlink transmission and a second downlink transmission to a terminal, wherein
the first downlink transmission and the second downlink transmission at least partially overlap in time domain but do not overlap in frequency domain, and a bandwidth capability of the terminal is N, and N is less than 20 MHz.

31. The apparatus according to claim 30, wherein in a case that a total quantity of frequency domain resources occupied by the first downlink transmission and the second downlink transmission is greater than the bandwidth capability of the terminal, a network-side device performs an erroneous scheduling or configuration behavior.

32. The apparatus according to claim 30 or 31, wherein the bandwidth capability of the terminal comprises at least one of the following:
a receiving bandwidth N1 of the terminal, wherein N1 is not greater than 20 MHz;
a cache bandwidth N2 of the terminal, wherein N2 is not greater than 20 MHz; or
a processing bandwidth N3 of the terminal, wherein N3 is not greater than 5 MHz.

33. A terminal, comprising a processor and a memory, wherein the memory stores a program or instructions executable on the processor, the program or the instructions, when executed by the processor, implementing the steps of the downlink transmission method according to any one of claims 1 to 13.

34. A network-side device, comprising a processor and a memory, wherein the memory stores a program or instructions executable on the processor, the program or instructions, when executed by the processor, implementing the steps of the downlink transmission method according to any one of claims 14 to 16.

35. A readable storage medium, storing a program or instructions, wherein the program or instructions, when executed by a processor, implement the steps of the downlink transmission method according to any one of claims 1 to 13, or implement the steps of the downlink transmission method according to any one of claims 14 to 16.
